# EUROPÄISCHE PATENTSCHRIFT

(11) **EP 3 759 038 B1**
(45) Veröffentlichungstag und Bekanntmachung des Hinweises auf die Patenterteilung: **22.02.2023**
(21) Anmeldenummer: 18815995.8
(22) Anmeldetag: 05.12.2018
(51) Int. Cl.: B65G 17/06, B65G 21/18

(54) **TRANSPORTAUFSATZ, ZUGMITTEL, PLATTENFÖRDERER UND VERFAHREN**
TRANSPORT ATTACHMENT, TRACTION MEANS, PLATE CONVEYOR AND METHOD
MODULE DE TRANSPORT, MOYEN DE TRACTION, CONVOYEUR À PLAQUE ET PROCÉDÉ

(30) Priorität: 28.02.2018 DE 102018001569
(43) Veröffentlichungstag der Anmeldung: 06.01.2021
(73) Patentinhaber: Interroll Holding AG, 6592 Sant' Antonino (CH)
(72) Erfinder: STEFFEN, Jonas, 41464 Neuss (DE); MAGGI, Alberto, 21030 Cuvio (IT); NAPPA, Vittorio, 21050 Clivio (IT)
(74) Vertreter: Kohlhof, Stephan
(86) Internationale Anmeldenummer: PCT/EP2018/083607
(87) Internationale Veröffentlichungsnummer: WO 2019/166117

(56) Entgegenhaltungen:
- WO-A1-2012/068699
- WO-A2-02/22470
- US-A- 1 136 578
- US-A1- 2014 305 775
- US-A1- 2016 272 431

## Beschreibung

Die Erfindung betrifft einen Transportaufsatz, ein Zugmittel, einen Plattenförderer sowie ein Verfahren zum Fördern von Fördergut entlang eines Plattenförderers. Plattenförderer dienen zum Transport von Fördergut auf einer Transportoberfläche, welche bereitgestellt wird durch eine Mehrzahl von Transportplatten. Die Transportplatten können mittels Seilzügen und/oder mittels zumindest einer Kette angetrieben werden. Bei der Führung der angetriebenen Zugmittel wie beispielsweise Stahlseile und/oder Förderketten ergeben sich insbesondere in der Kurvenführung Probleme mit der Kraftableitung der hierbei auftretenden Kräfte. Eine der hierbei auftretenden Kräfte ist eine Einschnürkraft, die mittels der Euler-Eytelwein-Formel beschrieben werden kann. Gegenüber dieser Einschnürkraft sollte die angetriebene Förderkette und/oder das angetriebene Stahlseil in Richtung zum Kurvenmittelpunkt möglichst reibungsfrei abgestützt werden.

Bei dem Betrieb eines Plattenförderers kann es zu einer erheblichen Lärmbelästigung kommen, insbesondere im Leerlauf und/oder bei einer Richtungsänderung des Zugmittels. Hierbei können die Transportplatten so gegen seitliche Führungen und/oder gegeneinander schlagen und/oder reiben, dass dabei eine Lärmbelästigung auftritt.

Das Dokument WO 02/22470 A1 offenbart einen Transportaufsatz nach dem Oberbegriff des Anspruchs 1 und ein Verfahren nach dem Oberbegriff des Anspruchs 15 und betrifft ein Verfahren zum Kühlen oder Gefrieren von transportierten Materialien oder Produkten. Dabei wird ein Spiralförderer verwendet, der in einem begrenzten Bereich radial umläuft, um die Materialien oder Produkte in einen gekühlten Tank einzubringen. Im Tank wird ein Kühlfluid, welches ein gelöster Stoff in Lebensmittelqualität sein kann, mit einer im Wesentlichen konstanten vorbestimmten Geschwindigkeit und Temperatur an dem Material vorbei zirkuliert, um das Material oder Produkt einzufrieren. Der dazu verwendete Spiralförderer kann gestufte Transportplatten aufweisen.

Der Erfindung liegt die Aufgabe zugrunde, einen Plattenförderer mit reduzierter Lärmbelästigung und/oder reduzierten Vibrationen zu ermöglichen.

Diese Aufgabe wird durch die Gegenstände der unabhängigen Ansprüche gelöst. Bevorzugte Ausführungsbeispiele sind die Gegenstände der abhängigen Ansprüche.

Ein Aspekt betrifft einen Transportaufsatz für einen Plattenförderer zum Fördern von Fördergut mit einer Transportplatte zum Fördern des Förderguts auf einer Transportoberfläche der Transportplatte. Der Transportaufsatz weist eine Verbindungseinrichtung mit einem Befestigungsmittel zum Befestigen des Transportaufsatzes an einem entlang einer Förderrichtung angetriebenen Zugmittel des Plattenförderers auf. Weiterhin weist der Transportaufsatz zumindest eine Plattenaufnahme zur Aufnahme einer in Förderrichtung benachbarten Transportplatte auf.

Der Transportaufsatz ist dazu ausgebildet und vorgesehen, als Teil des Plattenförderers an dem angetriebenen Zugmittel des Plattenförderers befestigt zu werden. Der Transportaufsatz kann z.B. als Aufsatz und/oder Schlitten auf das angetriebene Zugmittel des Plattenförderers aufgesetzt werden.

Das angetriebene Zugmittel ist bevorzugt als angetriebene Förderkette ausgebildet. Allgemein kann anstelle der Förderkette auch ein anderes Zugmittel verwendet werden wie z.B. ein Stahlseil, eine Gummiblockkette, etc. An einer Förderkette kann der Transportaufsatz besonders sicher befestigt werden, insbesondere zumindest formschlüssig.

Das Zugmittel ist entlang einer Förderrichtung angetrieben. Der Begriff "Förderrichtung" betrifft die Verlaufsrichtung und die Antriebsrichtung des angetriebenen Zugmittels entlang der Förderbahn durch den Plattenförderer, wobei die Transportplatten in Betriebsposition angeordnet sind. Dabei kann die Förderrichtung sowohl etwa horizontal geradlinige und/oder gekrümmte Förderabschnitte aufweisen, als auch (positive und/oder negative) Steigungsabschnitte aus der Horizontalen heraus. Weiterhin kann die Förderrichtung auch Kombinationen davon aufweisen, also geradlinige und/oder gekrümmte Steigungsabschnitte.

Der Transportaufsatz kann so an dem angetriebenen Zugmittel befestigt werden, dass die Transportplatte zumindest teilweise oberhalb und/oder über dem angetriebenen Zugmittel angeordnet ist, und zwar im Wesentlichen so, dass die Transportoberfläche in einer im Wesentlichen vertikale Richtung nach oben zeigt. Hierbei kann die Transportoberfläche in einer im Wesentlichen horizontalen Ebene angeordnet sein. Dies bedeutet, dass eine Normale auf die Transportoberfläche im Wesentlichen vertikal ausgerichtet sein kann. Bei einer Förderung entlang einer Steigung können hierbei leichte Abweichungen von der Horizontalen bzw. Vertikalen auftreten, z.B. im einstelligen oder zweistelligen Gradbereich kleiner als etwa 45°, insbesondere kleiner als etwa 25°. Die Transportoberfläche sollte in einer Betriebsposition jedoch immer so ausgerichtet sein, dass die Normale auf die Transportoberfläche im Wesentlichen vertikal nach oben weist.

Auf dem angetriebenen Zugmittel des Plattenförderers kann eine Mehrzahl baugleicher Transportaufsätze angeordnet sein. Diese Transportaufsätze können hintereinander auf dem angetriebenen Zugmittel angeordnet sein, insbesondere auf dieses aufgesetzt sein. Hierbei sind die Transportoberflächen der Transportaufsätze so angeordnet, dass sie zusammen eine im Wesentlichen zusammenhängende, bewegliche Förderoberfläche bilden, auf der die Fördergüter entlang des Plattenförderers gefördert werden können.

Die Transportplatte kann lattenförmig ausgebildet sein und/oder in Betriebsposition im Wesentlichen quer zur Förderrichtung des Plattenförderers oberhalb des angetriebenen Zugmittels angeordnet sein.

Mittels der Verbindungseinrichtung ist der Transportaufsatz an dem angetriebenen Zugmittel befestigbar. Hierbei kann die Verbindungseinrichtung insbesondere an und/oder unter der Transportplatte angeordnet sein. Insbesondere kann die Verbindungseinrichtung im Wesentlichen mittig unterhalb der Transportplatte angeordnet sein.

Die Verbindungseinrichtung und die Transportplatte sind Bestandteile des Transportaufsatzes. Der Transportaufsatz kann zusätzliche Bestandteile aufweisen, auf die nachfolgend mit Bezug zu den Ausführungsbeispielen eingegangen wird. Die Verbindungseinrichtung weist das zumindest eine Befestigungsmittel auf, mit dem der Transportaufsatz an dem angetriebenen Zugmittel befestigt werden kann. Die Befestigung kann zum Beispiel formschlüssig und/oder kraftschlüssig erfolgen. Das Befestigen kann zum Beispiel mittels einer Schraubverbindung, mittels einer Steckverbindung und/oder mittels einer Klemmverbindung erfolgen. Insbesondere kann das Befestigungsmittel ein Clipsmittel und/oder Rastmittel und/oder ein Klemmmittel aufweisen zum Eingehen einer z.B. lösbaren Clips- und/oder Rast- und/oder Klemmverbindung mit dem Zugmittel. So kann der Transportaufsatz z.B. auf das Zugmittel aufclipsbar sein.

Die Verbindungseinrichtung kann derart ausgebildet sein, dass der Transportaufsatz von dem Zugmittel abgelöst werden kann. Hierbei ist die Verbindungseinrichtung zur Bereitstellung einer lösbaren Verbindung ausgebildet. Dies ermöglicht, bei einer Beschädigung des Transportaufsatzes lediglich den beschädigten Transportaufsatz von dem Zugmittel zu lösen und/oder durch einen unbeschädigten Transportaufsatz zu ersetzen.

Bevorzugt ist die Befestigung an dem Zugmittel zumindest formschlüssig, so dass das Befestigungsmittel in Eingriff mit dem angetriebenen Zugmittel steht. Dabei kann das Befestigungsmittel so ausgebildet sein, dass es speziell für eine vorbestimmte Art und/oder Form der Förderkette vorgesehen und ausgebildet ist. Eine formschlüssige Befestigung ermöglicht eine sichere Wegeverfolgung einzelner Transportaufsätze.

Alternativ dazu kann der Transportaufsatz auch als Kettenglied des Zugmittels ausgebildet sein. Hierbei ist die Verbindungseinrichtung mit dem Befestigungsmittel zur Befestigung an den beiden in Förderrichtung benachbarten Kettengliedern (hier: Transportaufsätzen) ausgebildet.

Die Plattenaufnahme ist derart ausgebildet, dass die in Förderrichtung benachbarte Transportplatte zumindest teilweise in der Plattenaufnahme aufgenommen werden kann. Hierbei ist die benachbarte Transportplatte die etwa baugleiche Transportplatte des in Förderrichtung unmittelbar vorausgehenden oder nachfolgenden (und somit benachbarten) Transportaufsatzes, welcher ebenfalls an dem Zugmittel befestigt ist.

Dies bedeutet, dass die benachbarte Transportplatte die in Förderrichtung entweder unmittelbar vorausgehende oder unmittelbar nachfolgende Transportplatte ist. Die benachbarte Transportplatte kann im Wesentlichen baugleich zur Transportplatte des Transportaufsatzes ausgebildet sein.

Die Plattenaufnahme stellt einen Eingriff für einen Bereich der benachbarten Transportplatte bereit. Die Plattenaufnahme kann insbesondere zur bereichsweisen Aufnahme einer dem Transportaufsatz zugewandten Vorder- oder Hinterkante der benachbarten Transportplatte ausgebildet sein.

In der Plattenaufnahme kann die Bewegungsfreiheit des aufgenommenen Bereichs der benachbarten Transportplatte in zumindest zwei einander entgegengesetzt gerichtete Richtungen (z.B. oben und unten) durch die Plattenaufnahme begrenzt sein. Die zwei einander entgegengesetzt gerichteten Richtungen können als etwa vertikale Richtungen ausgebildet sein. Somit wird durch die Plattenaufnahme ein Bewegungsspiel der benachbarten Transportplatte begrenzt, z.B. in etwa vertikale Richtung. Dadurch kann eine Geräuschentwicklung durch eine unerwünschte Bewegung der benachbarten Transportplatte reduziert werden, insbesondere ein (z.B. vertikales) "Schlackern" der Transportplatte bei Förderung ohne Last. Genauso kann auch ein Verwackeln der Transportplatten in etwa horizontaler Richtung (also in etwa parallel zur Förderebene) gegeneinander reduziert werden, was ebenfalls zu einer Geräuschentwicklung führen kann. Bevorzugt wird durch die Aufnahme der benachbarten Transportplatte in die Plattenaufnahme sowohl ein etwa vertikales als auch ein etwa horizontales Verwackeln der Transportplatten gegeneinander reduziert.

Die Plattenaufnahme kann zumindest teilweise durch die Transportplatte gebildet werden, insbesondere durch einen Bereich der Unterseite der Transportplatte. So kann die Plattenaufnahme insbesondere zur Begrenzung der Bewegungsfreiheit der benachbarten Transportplatte in eine vertikale Richtung konfiguriert sein. Die Plattenaufnahme kann z.B. als Aussparung in einem zusätzlichen Bauteil des Transportaufsatzes ausgebildet sein, als Aussparung in der Transportplatte, oder zwischen der Unterseite der Transportplatte und einem zusätzlichen Bauteil des Transportaufsatzes. Bevorzugt ist die letztgenannte Variante, da hier ein geringer Bauteilaufwand erforderlich ist und die bereits vorhandene Unterseite der Transportplatte als zumindest einseitige Begrenzung der Plattenaufnahme verwendet werden kann.

Die Unterseite der Transportplatte ist hierbei an einer der Transportoberfläche gegenüberliegenden Seite der Transportplatte angeordnet. Die Unterseite zeigt in einer im Wesentlichen vertikalen Richtung nach unten. Hierbei kann die Unterseite in einer im Wesentlichen horizontalen Ebene angeordnet sein. Dies bedeutet, dass eine Normale zur Unterseite im Wesentlichen vertikal ausgerichtet sein kann. Bei einer Förderung entlang einer Steigung können hierbei leichte Abweichungen von der Horizontalen bzw. Vertikalen auftreten, z.B. im einstelligen oder zweistelligen Gradbereich kleiner als etwa 45°, insbesondere kleiner als etwa 25°. Die Unterseite kann in einer Betriebsposition jedoch immer so ausgerichtet sein, dass eine Normale zur Unterseite im Wesentlichen vertikal nach unten weist.

In Betriebsposition der Transportplatte kann ein Fördergut auf der Transportoberfläche der Transportplatte gefördert werden, so dass es z.B. allein aufgrund der Schwerkraft auf der Transportoberfläche liegen bleibt, ohne von der Transportplatte zu rutschen.

Bei der Rückführung der Transportaufsätze (und somit auch der Transportplatten) können die Transportoberfläche und/oder die Unterseite anders ausgerichtet sein. So kann die Transportoberfläche außerhalb der Betriebsposition z.B. nach unten zeigen oder zur Seite weisen. Dies gilt insbesondere bei einem endlos umlaufendem Zugmittel.

Die Transportoberfläche und die Unterseite bilden die beiden größten Flächen der Transportplatte aus.

Die Plattenaufnahme kann zusätzlich zu einem ggf. vorhandenen Dämpfungsmittel an der Transportplatte ausgebildet sein.

Die Plattenaufnahme kann zur formschlüssigen Aufnahme der benachbarten Transportplatte ausgebildet sein. Hierbei kann der Formschluss insbesondere in eine etwa vertikale Richtung wirken. In oder gegen die Förderrichtung wirkt der Formschluss nicht oder nur in eine Anschlagsrichtung, so dass sich die benachbarte Transportplatte während der Förderung entlang der Förderrichtung in die und aus der Plattenaufnahme hinein- und hinausbewegen kann. Insbesondere entlang einer Steigung des Plattenförderers können sich die jeweils benachbarten Transportaufsätze gegenseitig so verklemmen, dass durch einen Formschluss (in etwa vertikaler Richtung) auch deren horizontale Bewegung reduziert und/oder verhindert werden kann.

Somit wird eine Lösung bereitgestellt, durch welche die Bewegungsfreiheit der benachbarten Transportplatte reduziert wird und Klappergeräusche reduziert werden können.

Gemäß einer Ausführungsform ist die Plattenaufnahme zur Aufnahme einer im Wesentlichen baugleichen Transportplatte ausgebildet, die benachbart zum Transportaufsatz an dem Zugmittel befestigt ist. Die benachbarte Transportplatte kann als Bestandteil eines im Wesentlichen baugleichen Transportaufsatzes ausgebildet sein, der in Förderrichtung unmittelbar vorausgehend oder nachfolgend am Zugmittel befestigt ist. Der benachbarte Transportaufsatz kann ebenfalls eine Plattenaufnahme aufweisen. Mit anderen Worten kann jeder Transportaufsatz, welcher an dem Zugmittel befestigt ist, eine Plattenaufnahme für eine jeweils benachbarte Transportplatte aufweisen.

Gemäß einer Ausführungsform ist die Plattenaufnahme dazu ausgebildet, die Bewegungsfreiheit der benachbarten Transportplatte zumindest in eine etwa vertikale Richtung einzuschränken. Mit anderen Worten kann die Plattenaufnahme in oder gegen die Förderrichtung geöffnet ausgebildet sein, so dass sich die Vorder- oder Hinterkante der benachbarten Transportplatte in die und/oder aus der Plattenaufnahme hinein- und/oder herausbewegen kann. In die etwa vertikale Richtung kann ein Formschluss wirken, wenn die benachbarte Transportplatte in der Plattenaufnahme angeordnet ist. Die etwa vertikale Richtung kann eine Richtung betreffen, die etwa parallel zu einer Normalen zur Förderoberfläche angeordnet ist.

Gemäß einer Ausführungsform ist die Plattenaufnahme zwischen einer Unterseite der Transportplatte und einem an der Unterseite der Transportplatte ausgebildeten Eingriffelement ausgebildet. Das Eingriffelement kann als Bestandteil des Transportaufsatzes ausgebildet sein. Das Eingriffelement kann zumindest teilweise von der Unterseite der Transportplatte beabstandet sein. Diese Beabstandung bildet die Plattenaufnahme aus. Das Eingriffelement kann zumindest teilweise an der Unterseite der Transportplatte befestigt sein. Das Eingriffelement kann zwar einteilig mit der Transportplatte ausgebildet sein, es ist jedoch bevorzugt als eigenständiges Bauteil des Transportaufsatzes ausgebildet und an der Transportplatte befestigt. Dies vereinfacht die Herstellung des Transportaufsatzes. Die Nutzung der Unterseite der Transportplatte als Begrenzung der Plattenaufnahme (z.B. in vertikale Richtung) ermöglicht eine effiziente Bauteilnutzung.

Gemäß einer Weiterbildung ist das Eingriffelement an einem lateralen Plattenende der Transportplatte ausgebildet. Dies bedeutet, dass das Eingriffelement maximal etwa 20 mm vom lateralen Plattenende beabstandet angeordnet ist, bevorzugt maximal etwa 10 mm, besonders bevorzugt maximal etwa 3 mm. So kann das Eingriffelement insbesondere an einem lateral innenseitigen Plattenende ausgebildet sein. Am lateral innenseitigen Plattenende kommen sich die benachbarten Transportplatten besonders nahe und können sich in Kurvenführung dort sogar überlappen, weswegen die Anordnung der Plattenaufnahme hier besonders wirksam ist gegen eine unerwünschte Vertikalbewegung (und somit Geräuschentwicklung) der Transportplatten. Das Eingriffelement kann insbesondere an genau einem lateralen Plattenende der Transportplatte ausgebildet sein, also nicht am gegenüberliegenden (z.B. kurvenaußenseitigen) Plattenende.

Gemäß einer Weiterbildung weist das Eingriffelement einen in oder gegen die Förderrichtung weisenden Eingrifffinger auf und eine gegengesetzt gerichtete Fingeraufnahme zur Aufnahme eines Eingrifffingers eines baugleichen Eingriffselements der benachbarten Transportplatte. So kann der Eingrifffinger z.B. etwa gegen die Förderrichtung weisend ausgebildet sein und die Fingeraufnahme etwa in Förderrichtung gerichtet sein (oder beide umgekehrt). Die Plattenaufnahme kann von dem Eingrifffinger einerseits und der Unterseite der Transportplatte andererseits gebildet werden. Der Eingrifffinger kann z.B. etwa mittig an dem Eingriffelement ausgebildet sein, genauso wie die Fingeraufnahme auf der (z.B. in Förderrichtung) gegenüberliegenden Seite des Eingriffelements. Allgemein kann der Eingrifffinger bezüglich der Förderrichtung in genau entgegengesetzte Richtung weisen wie die Fingeraufnahme, um so den Eingriff jeweils benachbarter Eingriffelement ineinander zu ermöglichen.

Der Eingrifffinger und die Fingeraufnahme ermöglichen ein ineinander verschachteltes Aufnehmen der Eingrifffinger aufeinander folgender (also benachbarter) Transportplatten. Hierbei greift der Eingrifffinger immer dann in die Fingeraufnahme des benachbarten Eingriffelements ein, wenn auch die benachbarte Transportplatte in der Plattenaufnahme angeordnet ist. So wird durch den Eingrifffinger und die Fingeraufnahme eine laterale Führung der Eingriffselemente benachbarter Transportplatten ermöglicht.

Bevorzugt weist der Eingrifffinger in die Richtung, in welcher die Unterseite der Transportplatte eine Erhebung aufweist (also eine Stufe nach oben). Dort kann der Eingrifffinger besonders effizient von der Unterseite beabstandet sein und so die Plattenaufnahme ausbilden.

Gemäß einer Weiterbildung sind der Eingrifffinger und die Fingeraufnahme so dimensioniert, dass der in der Fingeraufnahme der benachbarten Transportplatte angeordnete Eingrifffinger ein horizontales Bewegungsspiel aufweist, insbesondere in laterale Richtung. Das Bewegungsspiel verhindert ein Verklemmen des Eingrifffingers in der Fingeraufnahme, insbesondere in Kurvenführung. Zusätzlich kann die Fingerspitze des Eingrifffingers abgerundet und/oder abgeflacht ausgebildet sein, um ein möglichst einfaches Einfädeln des Eingrifffingers in die Fingeraufnahme zu ermöglichen. Die Abflachung und/oder Abrundung kann so ausgebildet sein, dass sich der Eingrifffinger in Richtung zur Fingerspitze hin verjüngt, insbesondere in den beiden lateralen Richtungen.

Allgemein kann sich der Eingrifffinger auch in Richtung zur Fingerspitze hin in vertikaler Richtung verjüngen, so dass die Plattenaufnahme in Richtung zur benachbarten Transportplatte hin aufgeweitet ausgebildet ist. Dies kann ein Einfädeln der benachbarten Transportplatte in die Plattenaufnahme vereinfachen und/oder eine verbesserte Einführung der benachbarten Transportplatte in die Plattenaufnahme ermöglichen.

Gemäß einer Weiterbildung ist der Eingrifffinger oder die Fingeraufnahme zumindest teilweise vertikal beabstandet von einer Erhebung an der Unterseite der Transportplatte ausgebildet, welche in vertikale Überlappung mit einer Senkfläche der benachbarten Transportplatte eines in Förderrichtung nachfolgenden oder vorangehenden, baugleichen Transportaufsatzes des Plattenförderers bringbar ist. Die Plattenaufnahme wird hierbei zum einen durch die Unterseite der Transportplatte gebildet, zum anderen durch den abstehenden Eingrifffinger bzw. die abstehende Fingeraufnahme. Hierbei weist die Transportplatte sowohl eine Senkfläche als auch eine Erhebung auf. Senkfläche und Erhebung sind so ausgebildet, dass bei in Förderrichtung aufeinanderfolgenden Transportplatten die Senkfläche einer ersten Transportplatte unter der Erhebung einer zweiten Transportplatte angeordnet sein kann, insbesondere in Kurvenführung. Mit anderen Worten überlappen aufeinanderfolgende Transportplatten einander derart, dass (in Betriebsposition) die Senkfläche der ersten Transportplatte unterhalb der Erhebung der zweiten Transportplatte angeordnet ist. In einem anderen Ausführungsbeispiel kann die Senkfläche der zweiten Transportplatte unterhalb der Erhebung der ersten Transportplatte angeordnet sein. In Betriebsposition liegt eine Überlappung zweier aufeinanderfolgender Transportplatten in einer in etwa vertikalen Richtung vor. Gerade an einer solche Überlappung kann durch das aneinander Schlagen eine Geräuschbelastung vorliegen, insbesondere wenn die einander überlappenden Transportplatten gerade kein Fördergut transportieren, also unbelastet sind. Gleiches kann im Leerlauf erfolgen, also z.B. wenn die Transportplatten zurückgeführt werden

(und nicht mehr in Betriebsposition angeordnet sind). Durch die Ausbildung der Plattenaufnahme an der Senkfläche erfolgt eine effiziente Bauteilnutzung und Geräuschreduzierung.

Gemäß einer Weiterbildung ist das Eingriffelement an einer vertikalen Stufe ausgebildet, die in der Unterseite der Transportplatte ausgebildet ist. Hierbei kann die Transportplatte in Förderrichtung so stufenartig ausgebildet sein, dass ein hinteres Plattenende der Transportplatte zumindest teilweise mit einem vorderen Plattenende einer Transportplatte eines in Förderrichtung nachfolgenden, baugleichen Transportaufsatzes überlappt, insbesondere in Kurvenführung, also der Förderung entlang einer Kurve. Genauso kann das vordere Plattenende der Transportplatte zumindest teilweise mit einem hinteren Plattenende einer Transportplatte eines in Förderrichtung vorangehenden, baugleichen Transportaufsatzes überlappen. Die Bezeichnungen "hinten" und "vorne" beziehen sich hierbei auf die Förderrichtung des Plattenförderers. Die stufenartige Überlappung ermöglicht eine Vermeidung und/oder Reduzierung von Spalten zwischen den Transportplatten der Transportaufsätze. In diesem Ausführungsbeispiel ist die Transportplatte nicht ausschließlich mit einer glatten Oberfläche ausgebildet, sondern weist zumindest eine Stufe und somit eine Aussparung und/oder abgesenkte Senkfläche auf, die ein Vorsprung und/oder eine Hochfläche eines vorangehenden bzw. nachfolgenden Transportaufsatzes - in einer vertikalen Richtung betrachtet - überlappen kann. Hierbei kann z.B. zumindest 25%, bevorzugt zumindest 35%, der Transportplatte als vertikal abgesenkte Senkfläche ausgebildet sein. Dieser abgesenkte Teil der Transportplatte kann in Betriebsposition zumindest teilweise unter einer Erhebungsfläche (als Transportfläche) einer Transportplatte eines in Förderrichtung vorangehenden bzw. nachfolgenden, baugleichen Transportaufsatzes angeordnet sein.

Zudem kann z.B. zumindest 25%, bevorzugt zumindest 35%, der Transportplatte als vertikal erhöhte Erhebungsfläche ausgebildet sein. Dieser erhöhte Teil der Transportplatte kann in Betriebsposition zumindest teilweise über einer Senkfläche einer Transportplatte eines in Förderrichtung vorangehenden bzw. nachfolgenden, baugleichen Transportaufsatzes angeordnet sein. Der erhöhte Teil der Transportplatte kann als Erhebung der Transportplatte bezeichnet werden und/oder die Transportfläche bereitstellen, auf der das Fördergut gefördert wird.

Die Ausbildung des Eingriffselements und somit der Plattenaufnahme an der Stufe ermöglicht eine effiziente Bauteilnutzung und Geräuschreduzierung.

Gemäß einer Weiterbildung ist das Eingriffelement an die Unterseite der Transportplatte mittels Ultraschall angeschweißt. Das Eingriffelement ist somit zunächst als eigenständiges Bauteil bereitgestellt, dass an die Transportplatte geschweißt ist. Die Ultraschallschweißung ist sehr schnell und effizient durchzuführen und stellt eine belastbare, stoffschlüssige Verbindung bereit.

Gemäß einer Weiterbildung weist das Eingriffelement eine mittlere vertikale Stärke von etwa 1 mm bis etwa 5 mm auf, bevorzugt von etwa 2 mm bis etwa 3 mm. Die Stärke des Eingriffelements kann auf einen Abstand zwischen der Unterseite der Transportplatte und einer Gleitschiene auf einer (statischen) Bahnfläche abgestimmt sein. Weiterhin ermöglicht diese Stärke eine hinreichend feste Fixierung der benachbarten Transportplatte in der Plattenaufnahme, ohne zu viel Bauplatz zu benötigen.

Das Eingriffelement kann aus Kunststoff ausgebildet sein, z.B. aus PA und/oder PA6, z.B. mit einer Beimischung von etwa 10% bis 20% Glasfaser. So weist das Eingriffelement bevorzugte Materialeigenschaften auf, insbesondere hinsichtlich Festigkeit, Oberflächenrauhigkeit, Elastizität und/oder Abrieb.

Gemäß einer Ausführungsform ist die Transportplatte so asymmetrisch ausgebildet, dass die Breite der Transportplatte in Förderrichtung des Plattenförderers an einem lateral innenseitigen Plattenende kleiner ist als die Breite der Transportplatte in Förderrichtung des Plattenförderers an einem lateral außenseitigen Plattenende. Hierbei ist die Transportplatte so asymmetrisch ausgebildet, dass das innenseitige Plattenende schmäler ist als das außenseitige Plattenende. Die Begriffe "innenseitig" und "außenseitig" bezieht sich hierbei auf die Lage des jeweiligen lateralen Plattenendes in einer Kurve der Förderrichtung, entlang der das angetriebene Zugmittel des Plattenförderers geführt wird. Der Transportaufsatz ist hierbei für einen Plattenförderer vorgesehen und ausgebildet, welcher entlang seines Förderwegs immer in dieselbe Kurvenrichtung (rechts oder links herum) abbiegt. Hierbei ist das innenseitige Plattenende in Kurvenführung immer dem Kurvenmittelpunkt bzw. einer Wendelachse zugeordnet, während das außenseitige Plattenende immer vom Kurvenmittelpunkt bzw. der Wendelachse abgewandt angeordnet ist.

Die Asymmetrie der Transportplatte kann eine spaltfreie Kurvenführung ermöglichen. Spaltfrei kann hierbei bedeuten, dass selbst in Kurvenführung des Plattenförderers kein Finger einer Person senkrecht zur Förderplatte zwischen die Transportplatten der Transportaufsätze passt. Dies kann selbst an einer Außenkurve des Bahnverlaufs des Plattenförderers gelten, an der sich bei herkömmlichen Plattenförderern Spalte zwischen den einzelnen Transportplatten öffnen können. Bei gerader Streckenführung können die Transportplatten aufeinanderfolgender Transportaufsätze sich zumindest teilweise überlappen, so dass sich eine im Wesentlichen geschlossene Förderoberfläche bildet, die aus den einzelnen Transportoberflächen der aufeinanderfolgenden Transportaufsätze ausgebildet ist.

In Kurvenführung können die Transportplatten entlang der kürzeren Kurveninnenseite stärker zusammengeschoben und/oder zusammengefächert werden als an der Kurvenaußenseite. Zumindest an der Kurveninnenseite können die Transportplatten zumindest teilweise übereinander geschoben sein und/oder werden. An der Kurvenaußenseite können die aufeinanderfolgenden Transportplatten auseinandergezogen werden. Die asymmetrischen Transportplatten sind an der Kurvenaußenseite breiter ausgebildet, so dass selbst ein relativ starkes Auseinanderziehen an der Kurvenaußenseite keinen Spalt zwischen den Transportplatten aufreißt. Dabei kann die gesamte Förderoberfläche spaltfrei ausgebildet sein.

Allgemein können die Transportplatten aufeinanderfolgender Transportaufsätze in Betriebsposition zumindest teilweise überlappend und/oder zumindest teilweise übereinander angeordnet sein. In Kurvenführung können sie zumindest teilweise auseinandergefächert werden

Die asymmetrische Ausbildung der Transportplatten ermöglicht ein besonders sicheres, im Wesentlichen spaltfreies Fördern mit dem Plattenförderer.

Die Breite der Transportplatte in Förderrichtung kann im Wesentlichen stetig zunehmen, zum Beispiel vom innenseitigen Plattenende zum außenseitigen Plattenende und/oder vom innenseitigen Plattenende zu einem Mittelteil der Transportplatte und/oder von einem Mittelteil der Transportplatte zum außenseitigen Plattenende.

Gemäß einer Ausführungsform dieses Transportaufsatzes ist die Transportplatte am außenseitigen Plattenende in Förderrichtung zumindest 20% breiter ausgebildet als am innenseitigen Plattenende. Durch diese deutliche Verbreiterung wird eine hinreichende Kurvenführung ermöglicht mit im Wesentlichen spaltfreier Förderoberfläche des Plattenförderers. Bei einer geringeren Verbreiterung, also bei einer weniger stark ausgebildeten Asymmetrie, kann die Spaltfreiheit nur in sehr langgezogene Kurven ermöglicht werden, was bei einem Plattenförderer viel Platz erfordert. Für einen platzsparenden Plattenförderer mit enger Kurvenführung, insbesondere für einen als Wendellift ausgebildeten Plattenförderer, ist die beschriebene Verbreiterung um zumindest 25% vorteilhaft.

Gemäß einer Ausführungsform ist die Plattenaufnahme an einem lateral innenseitigen Plattenende der Transportplatte ausgebildet. An dieser Position kann sich insbesondere unter Kurvenführung eine (z.B. etwa vertikale) Überlappung benachbarter Transportplatten ergeben. Deswegen kann am lateral innenseitigen Plattenende die Plattenaufnahme besonders effizient eingesetzt werden.

Gemäß einer Ausführungsform ist die Plattenaufnahme so ausgebildet, dass die benachbarte Transportplatte bei Förderung entlang einer Kurve in der Plattenaufnahme angeordnet ist und bei geradliniger Förderung außerhalb der Plattenaufnahme. Bei geradliniger Förderung kann die benachbarte Transportplatte außerhalb der Plattenaufnahme angeordnet sein, welche die benachbarte Transportplatte nur in Kurvenführung aufnimmt, also in einem Förderabschnitt entlang einer (z.B. geneigten oder etwa horizontalen) Kurvenbahn.

Ein Aspekt betrifft ein Zugmittel für einen Plattenförderer mit einer Mehrzahl an dem Zugmittel befestigter Transportaufsätze nach dem voranstehenden Aspekt. Die Transportaufsätze können gleichmäßig voneinander beabstandet entlang des gesamten Zugmittels an dem Zugmittel befestigt sein. Weiterhin können die Transportaufsätze allesamt gleich ausgerichtet an dem Zugmittel befestigt sein, also z.B. so, dass die Transportoberflächen der Transportaufsätze eine im Wesentlichen zusammenhängende Förderfläche bilden. Insbesondere können sich die Transportaufsätze dabei zumindest teilweise überlappen. Das Zugmittel kann in sich geschlossen, also z.B. kreisförmig ausgebildet sein. Das Zugmittel kann insbesondere als angetriebene Förderkette ausgebildet sein. Hierbei kann zum Beispiel an jedem einzelnen, an jedem zweiten, oder an jedem dritten Kettenglied der Förderkette jeweils ein Transportaufsatz ausgebildet sein. Bevorzugt ist an jedem einzelnen Kettenglied ein Transportaufsatz befestigt.

Allgemein kann der Plattenförderer zumindest eine Richtungsänderung der Förderrichtung beinhalten, z.B. zumindest eine Kurve mit einer Richtungsänderung um zumindest 90°. Entlang einer solchen Kurve mit einem vorbestimmten Kurvenradius überlappen sich die aufeinanderfolgenden Transportplatten im Wesentlichen spaltfrei. Dies bedeutet, dass zwischen die einzelnen Transportplatten kein Finger einer Person mehr passt.

Gemäß einer Ausführungsform des Zugmittels sind die Transportaufsätze so dicht in Förderrichtung des Plattenförderers hintereinander an der Förderkette befestigt, dass die Transportplatten aufeinanderfolgender Transportaufsätze einander in Kurvenführung entlang einer vorbestimmten Kurvenform spaltfrei überlappen.

Ein Aspekt betrifft einen Plattenförderer mit einem Zugmittel nach dem vorangehend beschriebenen Aspekt. Der Plattenförderer weist einen Antrieb wie z.B. einen Motor auf, der das Zugmittel entlang eines vorbestimmten Zugweges und/oder Förderweges antreibt. An dem angetriebenen Zugmittel ist die Mehrzahl der Transportaufsätze befestigt und wird mitsamt dem Zugmittel angetrieben, sich entlang des vorbestimmten Zugweges und/oder Förderweges zu bewegen.

In einer Ausführungsform ist das Zugmittel durch den Plattenförderer entlang einer Wendelkurvenbahn geführt. Hierbei weist der Plattenförderer zumindest an einer Position eine Wendelkurvenbahn auf, d.h. eine Kurve mit einer Steigung. An dieser Wendelkurve bzw. Wendelkurvenbahn können Fördergüter auf der Förderoberfläche, die durch die Transportoberflächen der Transportaufsätze gebildet wird, entlang der Wendelkurve nach oben und/oder unten transportiert werden. Insbesondere können die Fördergüter an einer Position über eine Wendelkurvenbahn nach oben transportiert werden und/oder an einer anderen Position des Plattenförderers wieder nach unten, insbesondere entlang einer zweiten Wendelkurvenbahn desselben oder eines weiteren Plattenförderers.

In einer Ausführungsform des Plattenförderers weist der Plattenförderer eine Mehrzahl an der Wendelkurvenbahn des Plattenförderers angeordnete Abstützrollen zum Abstützen von lateralen Abstützflächen der entlang der Wendelkurvenbahn geführten und/oder angetriebenen Transportaufsätze auf. Diese lateralen Abstützrollen sind als Kurvenabstützrollen ausgebildet, die stationär fixiert an und/oder auf der Förderbahn des Plattenförderers angeordnet sind. Mit anderen Worten werden diese Abstützrollen nicht mitsamt dem Zugmittel gefördert und/oder angetrieben. Die Kurvenabstützrollen dienen zum Aufnehmen der Kurvenkräfte, in dem sie auf entlang der Wendelkurvenbahn geförderten lateralen Abstützflächen der Transportaufsätze abrollen. Hierbei können die lateralen Abstützrollen im Wesentlichen mittig entlang der Bahn angeordnet sein, insbesondere ein Stück zum Kurvenmittelpunkt und/oder zur Wendelachse hin versetzt von der Mitte der Förderbahn, so dass die lateralen Abstützflächen der Transportaufsätze entlang der Abstützrollen geführt sind.

In den geradlinig verlaufenden Streckenabschnitten und insbesondere entlang der Rückführungsstrecken des Zugmittels kann der Plattenförderer abstützrollenfrei ausgebildet sein.

Ein Aspekt betrifft ein Verfahren zum Herstellen eines Transportaufsatzes für einen Plattenförderer zum Fördern von Fördergut, mit den Schritten:
- Bereitstellen einer Transportplatte zum Fördern des Förderguts auf einer Transportoberfläche der Transportplatte;
- Bereitstellen einer Verbindungseinrichtung mit einem Befestigungsmittel zum Befestigen des Transportaufsatzes an einem angetriebenen Zugmittel des Plattenförderers; und
- Bereitstellen einer Plattenaufnahme an der Transportplatte zum Aufnehmen einer in Förderrichtung benachbarten Transportplatte.

Hierbei kann insbesondere ein Transportaufsatz gemäß dem eingangs beschrieben Aspekt hergestellt werden. Deswegen betreffen sämtliche Ausführungen zu diesem Aspekt auch das Verfahren und umgekehrt.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

Begriffe wie oben, unten, oberhalb, unterhalb, vertikal, horizontal usw. beziehen sich - sofern nicht anders spezifiziert - auf das Bezugssystem der Erde in einer Betriebsposition der Transportplatte und/oder des jeweiligen Gegenstands. Dabei kann die horizontale Richtung etwa parallel zur Förderoberfläche ausgerichtet sein und die vertikale Richtung in etwa senkrecht zur Förderoberfläche.

Der Begriff "lateral" bezieht sich auf eine im Wesentlichen horizontale Richtung quer, d.h. im Wesentlichen senkrecht, zur Förderrichtung, und etwa parallel zur Förderoberfläche.

Die Erfindung wird nachfolgend anhand von in Figuren gezeigten Ausführungsbeispielen näher beschrieben. Hierbei können gleiche oder ähnliche Bezugszeichen gleiche oder ähnliche Merkmale der Ausführungsformen kennzeichnen. Einzelne in den Figuren gezeigte Merkmale können in anderen Ausführungsbeispielen implementiert sein. Es zeigen:
- Fig. 1A: in einer Seitenansicht einen ersten Plattenförderer zum Fördern von Fördergut entlang einer Wendelkurvenbahn;
- Fig. 1B: in einer perspektivischen Ansicht den ersten Plattenförderer zum Fördern von Fördergut entlang einer Wendelkurvenbahn;
- Fig. 1C: in einer Ansicht von oben den ersten Plattenförderer zum Fördern von Fördergut entlang einer Wendelkurvenbahn;
- Fig. 1D: in einer perspektivischen Ansicht ein unteres Bahnende des ersten Plattenförderers zum Fördern von Fördergut entlang einer Wendelkurvenbahn;
- Fig. 2A: in einer Ansicht von oben einen zweiten Plattenförderer mit einer Förderoberfläche, die entlang einer Kurve geführt ist;
- Fig. 2B: in einer Ansicht von unten einen Ausschnitt des zweiten Plattenförderers mit einer Förderoberfläche, die teilweise entlang einer Kurve geführt ist;
- Fig. 2C: in einer Ansicht von unten einen Ausschnitt der Unterseite des zweiten Plattenförderers in Kurvenführung;
- Fig. 2D: einen vergrößerten Ausschnitt der Fig. 2B mit Eingriffelementen von Transportaufsätzen, die geradeaus geführt sind;
- Fig. 2E: einen weiteren vergrößerten Ausschnitt der Fig. 2B mit Eingriffelementen von Transportaufsätzen, die entlang einer Kurve geführt sind;
- Fig. 3: in einer perspektivischen Ansicht den zweiten Plattenförderer mit einer Förderoberfläche, die entlang einer Kurve geführt ist;
- Fig. 4: in einer perspektivischen Ansicht ein vergrößertes Detail eines Plattenförderers ohne Förderkette;
- Fig. 5A: in einer Ansicht von oben eine Ausführungsform eines Transportaufsatzes eines Plattenförderers;
- Fig. 5B: in einer Ansicht in Förderrichtung den Transportaufsatz eines Plattenförderers;
- Fig. 5C: in einer Ansicht von unten den Transportaufsatz eines Plattenförderers;
- Fig. 5D: in einer perspektivischen Ansicht von schräg unten den Transportaufsatz eines Plattenförderers; und
- Fig. 5E: in einer Seitenansicht den Transportaufsatz eines Plattenförderers.

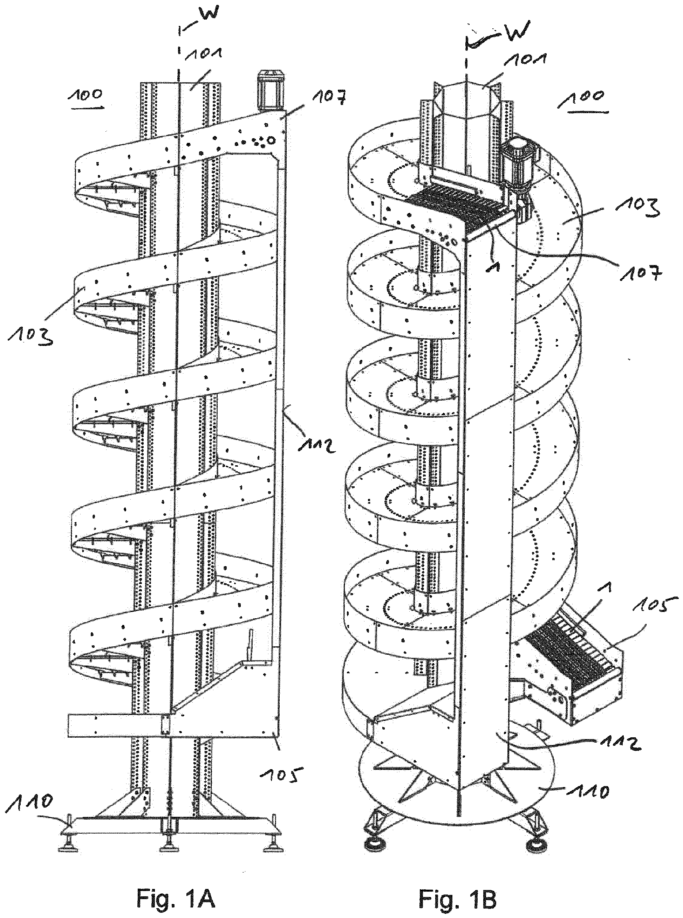

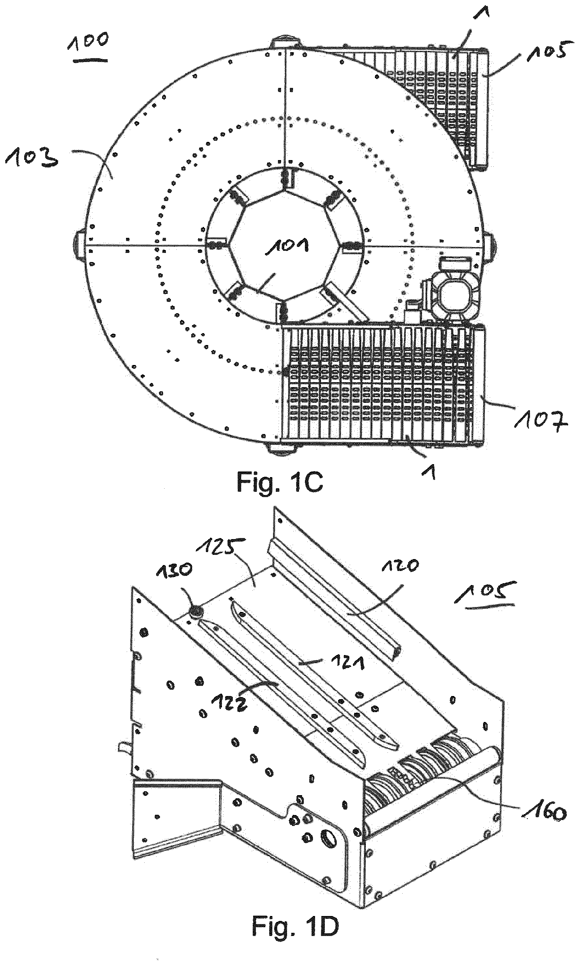

**Figur 1A** zeigt in einer Seitenansicht einen ersten Plattenförderer 100 zum Fördern von Fördergut entlang einer Wendelkurvenbahn 103. Der erste Plattenförderer 100 ist in den Figuren 1A, 1B, 1C und 1D nicht vollständig, sondern nur teilweise dargestellt. Insbesondere sind ein Zugmittel sowie Transportplatten des ersten Plattenförderers 100 nur teilweise gezeigt. Ein Großteil der Wendelkurvenbahn 103 ist vielmehr ohne Transportplatten, ohne Förderkette und auch ohne laterale Abstützrollen gezeigt.

Der erste Plattenförderer 100 weist einen Standfuß 110 auf, der zum Abstützen an einer Unterseite des Plattenförderers 100 ausgebildet ist.

**Figur 1B** zeigt den ersten Plattenförderer 100 in einer perspektivischen Ansicht. In Figur 1B sind lediglich schematisch einige Transportaufsätze 1 gezeigt, von denen jeder eine Transportplatte aufweist. Die Transportaufsätze 1 können als Schlitten ausgebildet und an einer (nicht in Figur 1 gezeigten) Förderkette als Zugmittel des Plattenförderers 100 befestigt, z.B. auf die Förderkette aufgesetzt sein.

Der Plattenförderer 100 weist ein unteres Bahnende 105 und ein oberes Bahnende 107 auf. Das untere Bahnende 105 ist mit dem oberen Bahnende 107 über eine Wendelkurvenbahn 103 verbunden. Die Wendelkurvenbahn 103 führt schraubenförmig vom unteren Bahnende 105 um eine Wendelsäule 101 herum entlang eines schraubenförmigen Förderweges zum oberen Bahnende 107.

Im dargestellten Ausführungsbeispiel des Plattenförderers 100 umläuft die Wendelkurvenbahn 103 die Wendelsäule 101 insgesamt fünfmal. In anderen Ausführungsformen kann die Wendelkurvenbahn 103 mehr oder weniger als fünf Umrundungen der Wendelsäule 101 umfassen. In einer Ausführungsform kann die Wendelkurvenbahn 103 die Wendelsäule 101 auch teilweise wie z.B. halb umrunden. Am oberen Bahnende 107 ist eine im Wesentlichen vertikal abfallende Rückführfläche 112 zurück zum unteren Bahnende 105 ausgebildet.

Der Plattenförderer 100 kann zum Beispiel als ein Wendellift ausgebildet sein, auf welchem Fördergut vom unteren Bahnende 105 entlang der Wendelkurvenbahn 103 zum oberen Bahnende 107 gefördert werden kann. Der Plattenförderer 100 kann auch in umgekehrter Richtung betrieben werden, also zum Fördern entlang der Wendelkurvenbahn 103 von oben nach unten.

Nicht in den Figuren 1A und 1B gezeigt ist eine angetriebene Förderkette des Plattenförderers 100, auf und an der die Transportaufsätze 1 befestigt sind. Die Förderkette ist als ein umlaufendes Zugmittel bereitgestellt und ist vom unteren Bahnende 105 entlang der Wendelkurvenbahn 103 zum oberen Bahnende 107 geführt und angetrieben. Die Rückführung der in sich geschlossenen Förderkette erfolgt vom oberen Bahnende 105 entlang der Rückführfläche 112 steil nach unten und von einem unteren Ende der Rückführfläche 112 an einer Unterseite des Plattenförderers 100 entlang zurück zum unteren Bahnende 105. Ein Antrieb der Förderkette kann, vorteilhaft an einem unteren oder oberen Bereich des Plattenförderers 100 ausgebildet sein. So kann z.B. eine obere und/oder untere Umlenkrolle des Plattenförderers 100 angetrieben ausgebildet sein, z.B. als angetriebene Rolle. Diese Umlenkrollen sind in den Figuren 1A und 1B von den Transportplatten verdeckt und deswegen nicht gezeigt. Eine untere Umlenkrolle 160 ist z.B. in Fig. 1D gezeigt, welche als angetriebene Rolle ausgebildet sein kann. Der Antrieb kann zumindest teilweise als ein außerhalb einer Umlenkrolle angeordneter Antrieb ausgebildet sein, wie beispielsweise als ein Getriebemotor, oder als zumindest eine Umlenkrolle mit innenliegendem Motor, die beispielsweise als Trommelmotor ausgeführt sein kann.

Auf dem gezeigten Plattenförderer 100 kann Fördergut entlang der Wendelkurvenbahn 103 in einer vertikalen Richtung nach oben und/oder auch in einer vertikalen Richtung nach unten gefördert werden.

Entlang der Wendelkurvenbahn 103 umkreist die schraubenförmige Förderbahn und/oder Bahnfläche des Plattenförderers 100 eine in den Figuren 1A und 1B gekennzeichnete Wendelachse W des Plattenförderers 100, welche in etwa mit einer Zylinderachse der Wendelsäule 101 zusammenfällt. Die Wendelachse W stellt in einer Ansicht von oben einen Kurvenmittelpunkt dar, um den die Förderkette und damit auch die Transportaufsätze 1 geführt werden.

**Figur 1C** zeigt in einer Ansicht von oben den Plattenförderer 100. Auch in Figur 1C sind lediglich einige wenige der Transportaufsätze 1 mit den Transportplatten gezeigt, nämlich diejenigen am oberen Bahnende 107 und am unteren Bahnende 105. Entlang der Wendelkurvenbahn 103 sind die Transportaufsätze 1 mitsamt den Transportplatten nicht gezeigt sondern in der Darstellung weggelassen. Entlang der Wendelkurvenbahn 103 sind Schraublöcher zum Befestigen statischer, lateraler Abstützrollen ausgebildet.

**Figur 1D** zeigt in einer perspektivischen Ansicht das untere Bahnende 105 des Plattenförderers 100 ohne Förderkette und ohne Transportaufsätze 1. In dem gezeigten Teilstück der Förderbahn sind zwei Schienen auf einer Bahnfläche 125 des Plattenförderers 100 angeordnet und ausgebildet. Die Schiene, die näher an der Wendelachse W angeordnet ist, ist als eine innenseitige Kettenführung 122 ausgebildet. Die andere Schiene, die weiter beabstandet von der Wendelachse W angeordnet ist, ist als eine außenseitige Kettenführung 121 ausgebildet.

Entlang des gezeigten geraden Teilstückes der Förderbahn wird die Förderkette zwischen den beiden als Schienen ausgebildeten Kettenführungen 121 und 122 geführt. In Kurvenstücken, insbesondere entlang der Wendelkurvenbahn 103, wird zur Reduzierung der Reibung und zum Aufnehmen der Einschnürkräfte die Förderkette nicht in solchen Schienen geführt, sondern an kurveninnenseitig der Förderkette angeordneten lateralen Abstützrollen 130.

In Figur 1D ist lediglich eine einzige der lateralen Abstützrollen 130 in Verlängerung der innenseitigen Kettenführung 122 dargestellt. Die Drehachse der lateralen Abstützrollen 130 ist dabei im Wesentlichen senkrecht zur Bahnfläche 125 ausgebildet. Damit sind die Drehachsen der lateralen Abstützrollen im Wesentlichen parallel zu einer vertikalen Richtung angeordnet, genauer um die Steigung der Bahnfläche 125 zur vertikalen Richtung versetzt.

Die lateralen Abstützflächen der an der Förderkette befestigten Transportaufsätze 1 liegen an den lateralen Abstützrollen 130 an und werden an ihnen kurvenaußenseitig vorbei geführt. Die statisch fixierten lateralen Abstützrollen 130 können hierbei zur Aufnahme der Kurvenkräfte an lateralen Abstützflächen der Transportaufsätze 1 abrollen.

Die lateralen Abstützrollen 130 können als horizontale Kugellager ausgebildet sein, welche die Einschnürkräfte auffangen und diese rollend abtragen. Dadurch werden negative Einflüsse der entstehenden und abzutragenden Kräfte auf die Bauteile des Plattenförderers 100 und 200 verringert.

An einer (z.B. kurvenaußenseitigen) lateralen Seitenwange der Bahnfläche 125 ist eine länglich ausgebildete Seitenführung 120 z.B. als eine Schiene ausgebildet, unter der die Transportaufsätze 1 hindurchgeführt werden. Durch diese Seitenführung 120 kann ein Anheben der Transportaufsätze 1 verhindert und/oder reduziert werden. Auf einer (kurveninnenseitigen) Gegenseite, die in der Figur 1D dargestellten Perspektive verdeckt ist, kann ebenfalls eine solche Seitenführung 120 angeordnet sein. Die Seitenführungen 120 können entlang der gesamten Bahnfläche 125 als Eingriffsschutz zwischen der lateralen Seitenwange und den Transportaufsätzen 1 und/oder als Abhebeschutz ausgebildet sein. Die Seitenführungen 120 können zum Beispiel als ein Hohlprofil ausgebildet sein. An den Seitenführungen 120 ist die laterale Breite der Förderbahn oberhalb der Bahnfläche 125 so weit reduziert, dass die lateralen, also z.B. die innenseitigen und außenseitigen, Plattenenden der Transportaufsätze 1 unterhalb der Seitenführungen 120 angeordnet sind.

Alternativ oder zusätzlich zu den Seitenführungen 120 kann entweder an der lateralen Seitenwange und/oder auf einem lateralen Bereich der Bahnfläche 125 zumindest eine längliche Gleitschiene angeordnet sein, auf denen die Transportaufsätze 1 geführt sind. Die Gleitschiene kann sich entlang der Förderrichtung erstrecken und/oder zur Führung von lateralen Plattenenden der Transportaufsätze 1 ausgebildet sein. Die Gleitschiene kann insbesondere zur tragenden Führung von flachen Eingriffelementen 60 ausgebildet sein, welche in den nachfolgenden Figuren näher beschrieben sind.

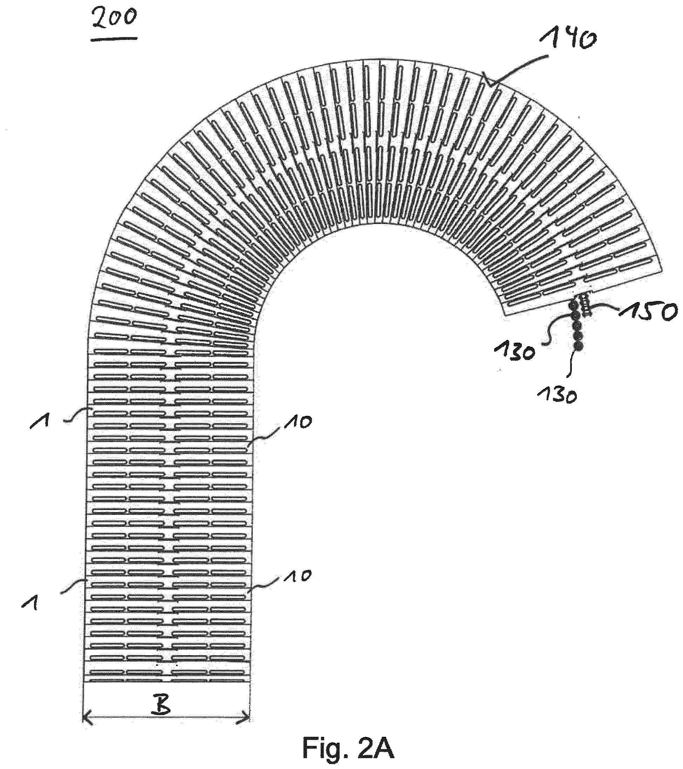

**Figur 2A** zeigt in einer Ansicht von oben einen zweiten Plattenförderer 200 mit einer Förderoberfläche 140, die entlang einer Rechtskurve ausgebildet und/oder geführt ist. Der zweite Plattenförderer 200 ist hierbei nicht vollständig, sondern lediglich teilweise gezeigt. In Figur 2A dargestellt sind eine Mehrzahl von Transportaufsätzen 1, welche an einer angetriebenen Förderkette 150 als Zugmittel befestigt sind. Jeder Transportaufsatz 1 weist eine Transportplatte mit einer Transportoberfläche 10 auf. Die Transportoberflächen 10 aller Transportaufsätze 1 zusammen bilden die Förderoberfläche 140. Hierbei sind die Transportoberflächen 10 der in Vorwärtsrichtung angetriebenen Transportaufsätze 1 im Wesentlichen in derselben Ebene angeordnet, wobei sich aufeinanderfolgende Transportoberflächen 10 teilweise überlappen können. Die Transportoberflächen 10 derjenigen Transportaufsätze 1, die gerade zurückgeführt werden und daher über Kopf angeordnet sein können (nicht in Fig. 2A gezeigt), können anders als in der Ebene der Förderfläche 140 angeordnet sein.

In dem in Figur 2A gezeigten Ausführungsbeispiel wird die Förderkette 150 zunächst entlang eines geradlinigen Teilstücks der Förderbahn angetrieben, woraufhin die Förderkette 150 entlang einer Kurve geführt ist, welche im Ausführungsbeispiel als Rechtskurve ausgebildet ist und in deren Verlauf sich die Förderrichtung etwa um 180° ändert. Im gezeigten Ausführungsbeispiel des Plattenförderers 200 erfolgt die Förderung von Fördergütern im Wesentlichen in derselben Ebene, nämlich einer im Wesentlichen horizontalen Ebene die von den zur Förderung in Vorwärtsrichtung ausgerichteten Transportoberflächen 10 aufgespannt wird. Die Förderung in einer horizontalen Ebene erfolgt auf ähnliche Art und Weise wie die Förderung entlang der Wendelkurvenbahn 103 des in den Figuren 1A bis 1D gezeigten ersten Plattenförderers 100.

Jeder Transportaufsatz 1 stellt eine Transportoberfläche 10 bereit, die in einer Richtung im Wesentlichen quer (also lateral) zur Förderrichtung größer ausgedehnt ist als in Förderrichtung. Die Förderrichtung eines Plattenförderers entspricht dabei dem Verlauf und der Antriebsrichtung der angetriebenen Förderkette 150. Die Förderkette 150 sowie die Transportaufsätze 1 sind bewegliche Bestandteile des Plattenförderers 200, d.h. sie werden relativ zu statisch fixierten Bestandteilen des Plattenförderers 200 angetrieben und/oder bewegt. Zu den statisch fixierten Bestandteilen des Plattenförderers 200 gehören die lateralen Abstützrollen 130 welche entlang der Kurve angeordnet sind, und um die die Förderkette 150 geführt ist. Die lateralen Abstützrollen 130 sind so angeordnet, dass ihre Drehachse im Wesentlichen in vertikaler Richtung angeordnet ist. Die lateralen Abstützrollen 130 dienen zusammen mit lateralen Abstützflächen der Transportaufsätze 1 zur Aufnahme und/oder zum Abrollen der Kurvenkräfte, die bei Kurvenführung der angetriebenen Förderkette 150 aufgenommen werden müssen.

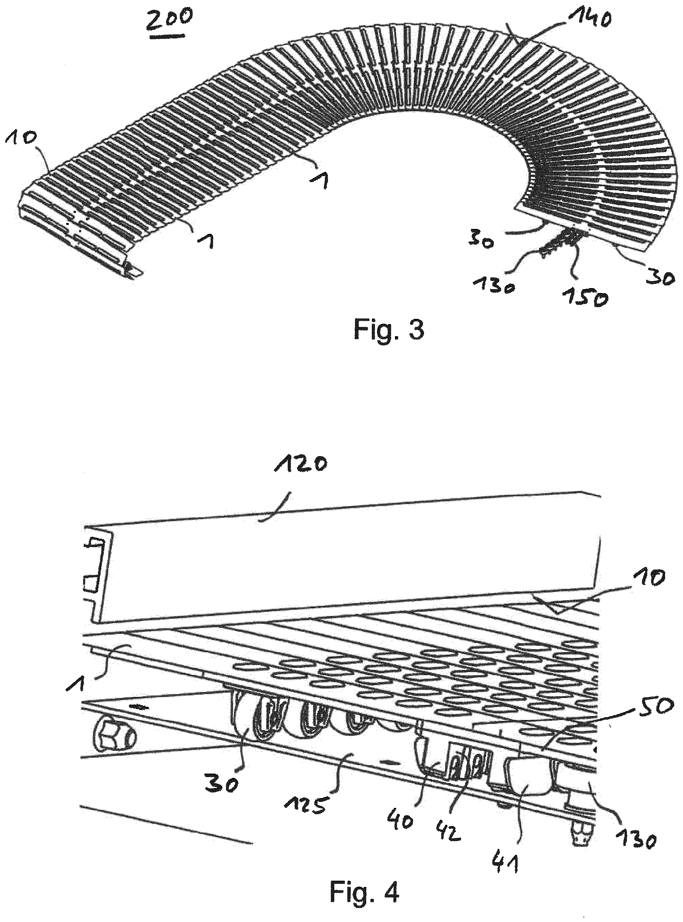

Lateral zur Förderrichtung stehen die Transportoberflächen 10 soweit über die Förderkette 150 über, dass durch die laterale Breite der Transportoberflächen 10 eine Bahnbreite B der Förderbahn definiert wird. Die Bahnbreite B ist abhängig von der lateralen Ausdehnung der Transportplatten 50 (vgl. hierzu z.B. Fig. 4) der Transportaufsätze 1. Entlang der Plattenförderer 100 und 200 weisen alle verwendeten Transportaufsätze 1 jeweils die gleiche laterale Ausdehnung auf, welche der jeweiligen Bahnbreite B entspricht.

In Kurvenführung entlang des Plattenförderers 100 und/oder 200 werden die Transportplatten 50 an einer Kurveninnenseite über- und untereinander zusammengestaucht, während sie an einer Kurvenaußenseite auseinander gefächert werden. Hierbei sind die Transportplatten 50 so ausgebildet und/oder entlang der Förderkette 150 angeordnet, dass sie selbst in Kurvenführung (z.B. in Ansicht von oben) eine im Wesentlichen spaltfreie Förderfläche 140 ausbilden.

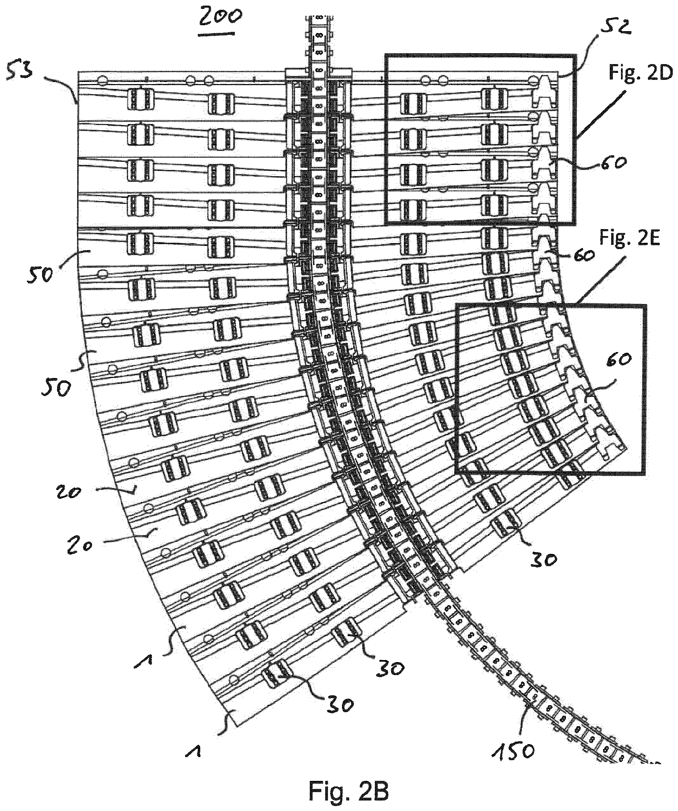

**Figur 2B** zeigt in einer Ansicht von unten einen Ausschnitt des zweiten Plattenförderers 200. Jeder der im Wesentlichen baugleichen Transportaufsätze 1 weist jeweils eine Transportplatte 50 auf. Die Transportplatten 50 der Transportaufsätze 1 weisen eine Unterseite 20 auf, welche in Figur 2B gezeigt ist. An der Unterseite 20 jedes Transportaufsatzes 1 sind im gezeigten Ausführungsbeispiel insgesamt vier lateral voneinander beabstandete Abstützplätze ausgebildet, an denen Tragrollen 30 angeordnet werden können. Im gezeigten Ausführungsbeispiel sind auf jeder Unterseite 20 jedes Transportaufsatzes 1 genau vier Tragrollen 30 angeordnet, und zwar an jedem Flügel jeweils zwei Tragrollen 30. Dies bedeutet, dass sowohl an einem kurveninnenseitigen Flügel jeweils zwei Tragrollen 30 angeordnet sind als auch an einem kurvenaußenseitigen Flügel jeweils zwei Tragrollen 30. Damit sind im gezeigten Ausführungsbeispiel sämtliche Abstützplätze mit jeweils einer Tragrolle 30 besetzt.

In anderen Ausführungsformen kann z.B. nur eine Tragrolle 30 pro Flügel vorgesehen sein oder auch drei Tragrollen 30 pro Flügel, so dass zum Beispiel auch Plattenförderer realisiert werden können, bei denen jeder Transportaufsatz 1 mit insgesamt sechs Tragrollen 30 versehen ist. Dies kann dann sinnvoll sein, wenn eine hohe Förderlast erwartet wird. Das Anbringen mehrerer Tragrollen 30 kann auch ermöglichen, dass eine relativ weite Bahnbreite B realisiert werden kann.

An einem der lateralen Plattenenden weist jede der Transportplatten 50 jeweils ein Eingriffelement 60 auf. Die Eingriffelemente 60 der benachbarten Transportplatten 50 können in Eingriff miteinander gebracht werden, insbesondere in Kurvenführung. Jede Transportplatte 50 weist an einem ersten lateralen Ende ein (kurven-)innenseitiges Plattenende 52 auf und an einem zweiten lateralen Ende ein (kurven-)außenseitiges Plattenende 53. Dabei sind diese beiden Plattenenden 52 und 53 an jeweils lateral gegenüberliegenden Enden der Transportplatte 50 angeordnet. Die Transportplatten 50 sind asymmetrisch ausgebildet und dafür vorgesehen, in Kurvenführung immer mit dem (schmäleren) innenseitigen Plattenende 52 zum Kurvenmittelpunkt und/oder zur Wendelachse hin zu weisen, und entsprechend mit dem (breiteren) außenseitigen Plattenende 53 weg vom Kurvenmittelpunkt und/oder der Wendelachse.

Mehrere Ausschnitte der Fig. 2B sind in den nachfolgenden Figuren vergrößert gezeigt.

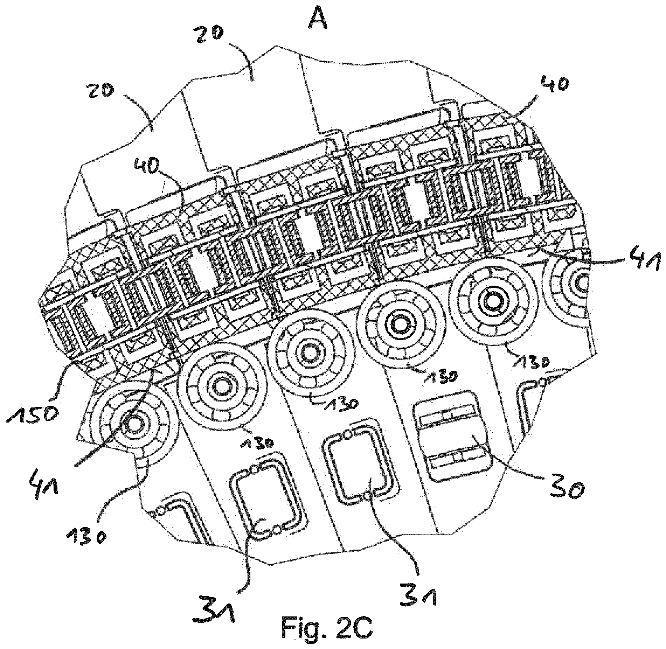

**Figur 2C** zeigt einen Ausschnitt der Unterseite des Plattenförderers 200 in vergrößerter Darstellung. Gezeigt ist ein Ausschnitt mit mehreren aufeinanderfolgenden Kettengliedern der Förderkette 150, die in Verbindungseinrichtungen 40 eingebracht und daran befestigt ist. Die Verbindungseinrichtungen 40 sind an der Unterseite der Transportaufsätze 1 ausgebildet und angebracht. Jeder Transportaufsatz 1 weist im gezeigten Ausführungsbeispiel genau eine solche Verbindungseinrichtung 40 auf, die an zumindest einem Kettenglied der Förderkette 150 befestigt ist. Hierbei weisen die Verbindungseinrichtungen 40 eine größere laterale Ausdehnung auf als die Kettenglieder der Förderkette 150.

Im Rahmen der Erfindung wird mit lateraler Ausdehnung immer die Ausdehnung quer und/oder senkrecht zur Förderrichtung bezeichnet, also eine Richtung senkrecht zur angetriebenen Führungsrichtung der angetriebenen Förderkette 150 und etwa parallel zur Transportoberfläche 10. Zugleich kann die laterale Richtung eine (in Betriebsposition des Plattenförderers) im Wesentlichen horizontale Richtung sein.

Jede der Verbindungseinrichtungen 40 weist zumindest kurveninnenseitig eine laterale Abstützfläche 41 auf. Die lateralen Abstützflächen 41 der Transportaufsätze 1 stellen zusammen eine Abrollfläche für die statisch fixierten lateralen Abstützrollen 130 bereit. Wie in Figur 2C gezeigt, rollen die statischen lateralen Abstützrollen 130 nicht unmittelbar auf der Förderkette 150 ab und verschleißen somit nicht unmittelbar die Förderkette 150. Vielmehr verschleißen wenn dann die lateralen Abstützflächen 41, welche einfacher als die Förderkette 150 austauschbar sind, z.B. durch Abnahme und/oder Austausch des Transportaufsatzes 1. Ein Austauschen des Transportaufsatzes 1 ist zudem einfacher als ein Austauschen eines oder mehrerer Kettenglieder der Förderkette 150, da beim Austausch einer der Transportaufsätze 1 die Förderkette 150 nicht geöffnet werden muss.

Die lateralen Abstützrollen 130, die an einer in Fig. 2C nicht gezeigten Bahnfläche 125 befestigt sind, sind lediglich entlang der Kurvenführung ausgebildet, nicht aber (oder nur vereinzelt) entlang der geradlinigen Streckenverläufe der Förderbahn des Plattenförderers 200. Dadurch kann gegenüber herkömmlichen Plattenförderern die Anzahl der benötigten Abstützrollen reduziert werden.

In Kurvenführung stellen die lateralen Abstützflächen 41 eine unter der Transportplatte 50 angeordnete, zusammenhängende, nach dem kurveninnenseitigen Plattenende hin gerichtete Abrollfläche bereit. An den lateralen Abstützflächen 41, insbesondere an den Enden der Abstützfläche 41 in und gegen die Förderrichtung, können Vorsprünge und/oder Aussparungen ausgebildet sein, die zu einem teilweise Überlappen benachbarter lateraler Abstützflächen 41 führen. Dies ist nachfolgend insbesondere im Zusammenhang mit den Figuren 6A bis 6E näher beschrieben.

Die lateralen Abstützflächen 41 benachbarter Verbindungseinrichtungen 40 können so dicht hintereinander entlang der Förderkette 150 angeordnet sein, dass sie sich zumindest in Kurvenführung an der Kurveninnenseite berühren und/oder überlappen. Dadurch wird eine zumindest in Kurvenführung dem Kurvenmittelpunkt bzw. der Wendelachse W zugewandte, zusammenhängende Abrollfläche für die statisch fixierten lateralen Abstützrollen 130 bereitgestellt, die im Wesentliche spaltfrei ausgebildet ist.

Diese Abrollfläche, die von den lateralen Abstützflächen 41 der einzelnen Transportaufsätze 1 bereitgestellt wird, ist im Wesentlichen entlang der Förderrichtung ausgebildet - allerdings leicht versetzt zum Kurvenmittelpunkt hin - sowie entlang einer vertikalen Richtung.

Ebenfalls in Figur 2C gezeigt sind einige der freien Abstützplätze 31 sowie ein besetzter Abstützplatz 31, an dem eine Tragrolle 30 angeordnet ist.

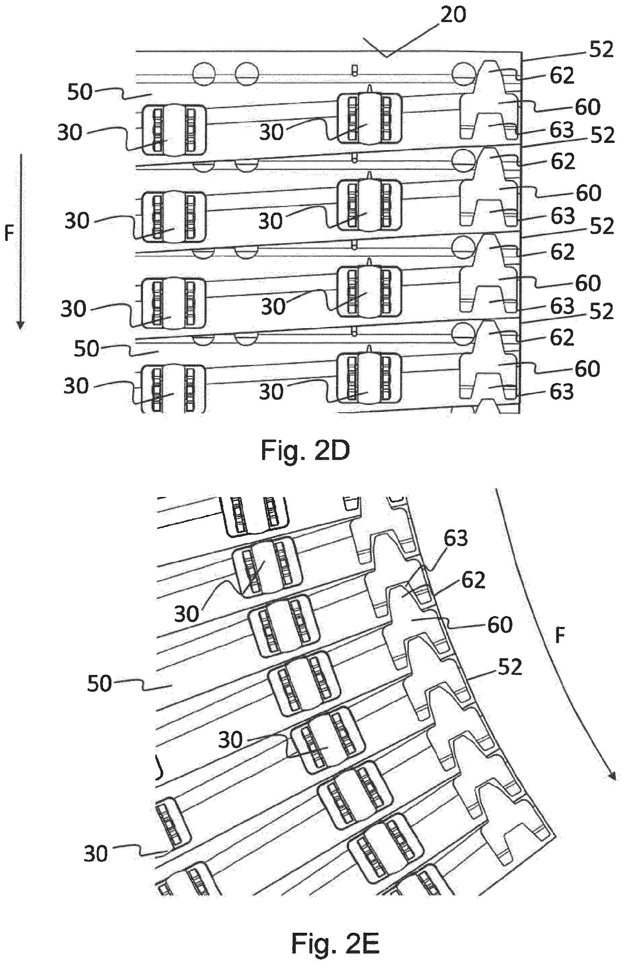

**Figur 2D** zeigt einen vergrößerten Ausschnitt der Fig. 2B mit den Eingriffelementen 60 von Transportaufsätzen 1, die geradeaus geführt sind. Dies bedeutet, dass das (in Fig. 2D nicht gezeigte) Zugmittel, also die Förderkette 150, entlang des gezeigten Abschnitts der Förderstrecke im Wesentlichen geradlinig geführt ist. Somit werden auch die Transportaufsätze 1 etwa geradeaus geführt und die Förderrichtung F des Plattenförderers 200 ist ebenfalls im Wesentlichen geradlinig angeordnet. Bei einer solchen etwa geradlinigen Förderung überlappen sich benachbarte Transportplatten 50 an ihrem jeweiligen kurveninnenseitigen Plattenflügel (insbesondere am innenseitigen Plattenende 52) kaum oder gar nicht, d.h. z.B. zu weniger als 5% und/oder 2% ihrer Ausdehnung in Förderrichtung F. Bei etwa geradliniger Förderung können sich benachbarte Transportplatten 50 jedoch an ihrem jeweiligen kurvenaußenseitigen Plattenflügel (insbesondere am außenseitigen Plattenende 53) stärker überlappen, welche in Kurvenführung auseinander gefächert werden.

**Figur 2E** zeigt einen vergrößerten Ausschnitt der Fig. 2B mit Eingriffelementen 60 von Transportaufsätzen 1, die entlang einer Kurve geführt sind. Dies bedeutet, dass die (in Fig. 2E nicht gezeigte) Förderkette 150 entlang des gezeigten Abschnitts der Förderstrecke entlang einer Kurvenbahn geführt ist. Somit werden auch die Transportaufsätze 1 entlang einer Kurvenbahn geführt und die Förderrichtung F des Plattenförderers 200 ist ebenfalls gekrümmt ausgebildet und folgt einer Kurvenbahn. Bei dieser Kurvenführung überlappen sich benachbarte Transportplatten 50 an ihrem jeweiligen kurveninnenseitigen Plattenflügel stark, insbesondere an ihrem jeweiligen (kurven-)innenseitigen Plattenende 52. Hierbei können sich benachbarte Transportplatten 50 bereichsweise (insbesondere am innenseitigen Plattenende 52) um zumindest etwa 25% und/oder 35% ihrer Ausdehnung in Förderrichtung F überlappen. Zugleich überlappen sich in Kurvenführung benachbarte Transportplatten 50 an ihrem jeweiligen kurvenaußenseitigen Plattenflügel (insbesondere am außenseitigen Plattenende 53) weniger stark als in geradliniger Führung. Es kann jedoch vorgesehen sein, dass auch in Kurvenführung am außenseitigen Plattenende 53 eine gewisse Restüberlappung ausgebildet ist, um ein unbeabsichtigtes Eingreifen z.B. eines Fingers und/oder eines Gegenstands zwischen die Transportplatten 50 zu reduzieren und/oder ganz zu verhindern.

Wie in den Figuren 2D und 2E gezeigt, weist jede Transportplatte 50 an einem lateralen Plattenende, genauer an ihrem jeweiligen (kurven-)innenseitigen Plattenende 52, jeweils eines der Eingriffelemente 60 auf. Das Eingriffelement 60 ist an der Unterseite 20 der Transportplatte 50 angebracht.

Jedes Eingriffelement 60 weist einen Eingrifffinger 62 auf, welcher im gezeigten Ausführungsbeispiel "nach hinten" weist, also gegen die Förderrichtung F. Jedes Eingriffelement 60 weist zudem eine Fingeraufnahme 63 auf, welche im gezeigten Ausführungsbeispiel "nach vorne" weist, also in Förderrichtung F.

Das Eingriffelement 60 ist im Wesentlichen flächig und etwa parallel zur Transportplatte 50 und somit der Transportoberfläche 10 ausgebildet, also im Wesentlichen horizontal angeordnet. Die laterale Breite des Eingrifffingers 62 ist etwas kleiner dimensioniert als die laterale Weite der Fingeraufnahme 63. Der Eingrifffinger 62 und die Fingeraufnahme 63 sind so dimensioniert und an der Unterseite 20 angeordnet, dass der Eingrifffinger 62 einer ersten Transportplatte 50 in Kurvenführung einfach in die Fingeraufnahme 63 einer benachbarten, nachfolgenden zweiten Transportplatte 50 eingreift (vgl. Fig. 2E). Die Fingeraufnahme 63 ist dazu ausgebildet und konfiguriert, den Eingrifffinger 62 eines benachbarten, vorangehenden Transportaufsatzes 1 aufzunehmen.

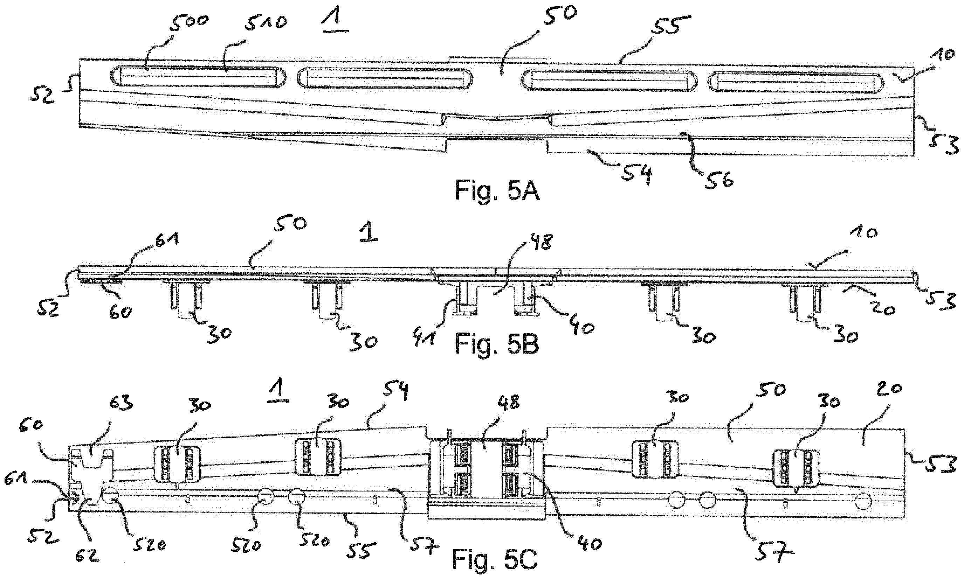

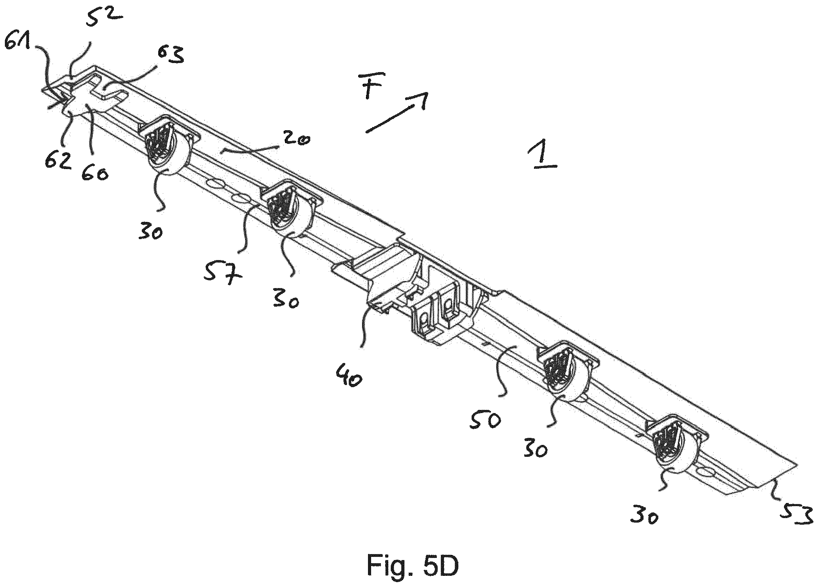

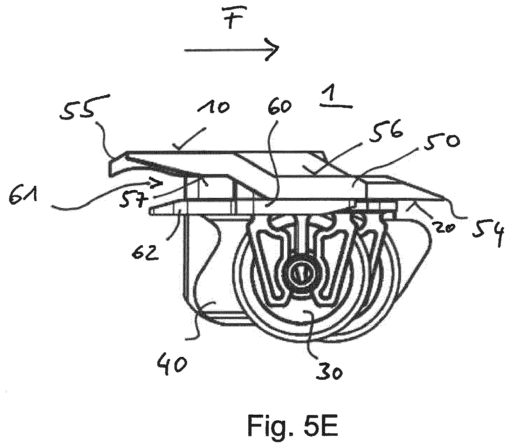

Alternativ zu der gezeigten Ausführungsform kann das Eingriffelement 60 auch umgekehrt angeordnet sein: Hier weist der Eingrifffinger 62 "nach vorne", also in Förderrichtung F, und die Fingeraufnahme 63 "nach hinten", also gegen die Förderrichtung F. Bevorzugt weist der Eingrifffinger 62 wie gezeigt gegen die Förderrichtung F und bildet zusammen mit der Unterseite eine Plattenaufnahme 61 (vgl. nachfolgende Figur 5) für die benachbarte, jeweils nachfolgende Transportplatte 50 aus.

Der Eingrifffinger 62 weist lateral abgerundete Ecken an seiner Fingerspitze auf. Dadurch wird der Eingriff in die Fingeraufnahme 63 vereinfacht und erleichtert. Zudem weist der Eingrifffinger 62 in der Fingeraufnahme 63 ein ausreichendes Bewegungsspiel, um ein horizontales Verklemmen der Transportplatten 50 in Kurvenführung zu vermeiden. Wie in Fig. 2E gezeigt, berührt der Eingrifffinger 62 das benachbarte Eingriffelement 60 selbst in Kurvenführung nicht oder nur kaum. Der Eingrifffinger 62 selbst kann (selbst in Kurvenführung) im Wesentlichen ohne Berührkontakt zum benachbarten Eingriffelement 60 in dessen Fingeraufnahme 63 angeordnet sein. Weiterhin kann die Fingeraufnahme 63 in Richtung von der Transportplatte 50 weg aufgeweitet ausgebildet sein, um so den Eingriff in die Fingeraufnahme 63 zu vereinfachen und/oder zu erleichtern. Weiterhin kann dadurch ein Verklemmen des Eingrifffingers 62 in der Fingeraufnahme 63 reduziert werden.

Insbesondere entlang eines Förderabschnitts mit einer Steigung können sich die jeweils benachbarten Transportaufsätze 1 in Kurvenführung durch Eingriff in die Plattenaufnahme 61 (s.u.) auch in etwa vertikaler Richtung verkeilen und/oder verklemmen. Im Gegensatz zu einem Verklemmen der Eingrifffinger 62 in den zugeordneten Fingeraufnahmen 63 ist dieses Verkeilen ein beabsichtigter Effekt, um auch ein Verwackeln benachbarter Transportaufsätze 1 in etwa horizontaler Richtung und die davon abhängige Geräuschentwicklung zu reduzieren.

In der in Fig. 2D gezeigten etwa geradlinigen Förderung greifen die Eingrifffinger 62 nicht in die benachbarten Fingeraufnahmen 63 ein. Vielmehr überlappen die Eingrifffinger 62 (in vertikaler Betrachtungsrichtung) die benachbarte Transportplatte 50 nicht, sondern nur in Kurvenführung.

Die Fingeraufnahme 63 ist als Aussparung zwischen zwei in Förderrichtung F weisenden Außenfingern ausgebildet, welche den Eingrifffinger 62 in der in Fig. 2E gezeigten Eingriffsposition an seinen beiden lateralen Seiten aufnehmen und/oder führen.

**Figur 3** zeigt in einer perspektivischen Ansicht Teile des zweiten Plattenförderers 200. Die Figur 3 zeigt einen ähnlichen Ausschnitt wie zum Beispiel Figur 2A, lediglich in einer perspektivischen Darstellung. An einem Ende des geradlinigen Verlaufs des Plattenförderers 200 ist gezeigt, wie die Transportaufsätze 1 nach unten weggeklappt werden zum Zurückführen der Förderkette 150 unterhalb der Förderfläche 140. Wie in den Figuren 2A und 2B sind auch in Figur 3 Bahnbegrenzungen, Seitenführungen und/oder Bahnflächen etc. nicht dargestellt. Diese Elemente des zweiten Plattenförderers 200 können ähnlich oder identisch zu denjenigen des in den Figuren 1A bis 1D gezeigten ersten Plattenförderers 100 ausgebildet sein.

**Figur 4** zeigt in einer perspektivischen Darstellung einen Ausschnitt des zweiten Plattenförderers 200 ohne angetriebene Förderkette 150, jedoch mit einigen Elementen der Bahnfläche 125, oberhalb derer die angetriebene Förderkette 150 geführt wird. So ist insbesondere ein Teil der Bahnfläche 125 gezeigt, welche in einer im Wesentlichen horizontalen Ebene angeordnet ist. Die Bahnfläche 125 ist im Wesentlichen parallel zur Förderfläche 140 unterhalb dieser angeordnet und in etwa gleich groß ausgebildet. Die Bahnfläche 125 definiert die Förderbahn des Plattenförderers 100 bzw. 200 und kann zum Abrollen und zum Abstützen der Tragrollen 30 dienen, die auf der Unterseite 20 der Transportaufsätze 1 angeordnet sind und die Gewichtskraft der Transportaufsätze 1, der schwebend geführten Förderkette 150 und/oder der geförderten Fördergüter tragen.

In etwa mittig unter einer Transportplatte 50 der Transportaufsätze 1 ist die Verbindungseinrichtung 40 gezeigt, welche die laterale Abstützfläche 41 aufweist als Abrollfläche für die lateralen Abstützrollen 130. Die lateralen Abstützrollen 130 können an und/oder auf der Bahnfläche 125 befestigt sein, z.B. mittels einer Schraub- und/oder Schweißverbindung.

Die Förderkette 150 ist in Figur 4 nicht gezeigt, was eine Ansicht auf einen inneren Hohlraum in der Verbindungseinrichtung 40 ermöglicht. Dieser Hohlraum kann als eine Zugmittelaufnahme für die Förderkette 150 ausgebildet sein. Im Inneren der Verbindungseinrichtung 40 ist zumindest ein Befestigungsmittel 42 vorgesehen, welches zum Beispiel als ein Clips ausgebildet sein kann zum Anclipsen an die Förderkette 150, insbesondere an ein Kettenglied der Förderkette 150. Eine Clipsverbindung ermöglicht eine einfach herzustellende und einfach zu lösende formschlüssige Verbindung des Transportaufsatzes 1 mit der Förderkette 150.

Anstelle einer Förderkette 150 kann ein anderes Zugmedium wie z.B. ein Stahlseil und/oder eine Gummiblockkette verwendet werden.

Die Mittelachse der Förderkette 150 kann in Betriebsposition tiefer angeordnet sein als der Mittelpunkt der statisch fixierten lateralen Abstützrollen 130. Dadurch kann ein Kippmoment und somit ein Anpressdruck der Transportaufsätze 1 samt Zugmittel in Richtung der Bahnfläche 125 erzeugt werden und somit ein ungewolltes Abheben der Transportaufsätze 1 verhindert werden.

Die Transportoberflächen 10 sind in Betriebsposition unterhalb der Seitenführungen 120 angeordnet, welche ein Abheben der Transportaufsätze 1 von der Bahnfläche 125 unter Einwirkung einer einseitigen äußeren Kraft, die beispielsweise durch eine einseitig auf der Transportoberfläche 10 positioniertes Fördergut oder Fremdkörper verhindern und/oder reduzieren. Die Transportoberflächen 10 sind in Betriebsposition derart unterhalb der Seitenführungen 120 angeordnet und/oder davon beabstandet, dass ohne Einwirkung einer einseitigen äußeren Kraft auf die Transportoberfläche 10 die Seitenführungen 120 im Wesentlichen nicht berührt werden, um Reibung, Verschleiß und Geräuschentwicklung möglichst gering zu halten. Damit tragen sie zur schwebenden Führung der Förderkette 150 bei. Die Bahnfläche 125, die Seitenführungen 120 und die lateralen Abstützrollen 130 stellen statisch fixierte Elemente des Plattenförderers 100 bzw. 200 dar.

**Figur 5A** zeigt eine Ansicht von oben auf die Transportplatte 50 eines der Transportaufsätze 1 gemäß eines Ausführungsbeispiels. Die Ansicht von oben gewährt einen Blick auf die Transportoberfläche 10 der Transportplatte 50. Die Transportoberfläche 10 ist in Betriebsposition so ausgerichtet, dass sie vom Zugmittel weg weist, und zwar etwa vertikal nach oben.

Die Transportplatte 50 weist eine Mehrzahl von Dämpfungsmitteln 500 auf, welche die Transportplatte 50 vollständig von der Transportoberfläche 10 bis zur Unterseite 20 durchdringen können. An der Transportoberfläche 10 ragen Bereiche der Dämpfungsmittel 500 als Haftbereiche 510 aus der Transportoberfläche 10 hervor. Diese Haftbereiche 510 verhindern und/oder reduzieren ein Verrutschen von Fördergütern auf den Transportplatten 50. Dies kann insbesondere bei einer Förderung entlang einer Steigung (wie z.B. bei dem ersten Plattenförderer 100) vorteilhaft sein. Die Haftbereiche 510 können z.B. als Elastomerelemente und/oder Gummierungen ausgebildet sein. Im gezeigten Ausführungsbeispiel ist eine Mehrzahl von Dämpfungsmitteln 500 pro Transportplatte 50 vorgesehen, insbesondere vier Dämpfungsmittel 500 mit jeweils einem Haftbereich 510, welcher eine längliche Ausbildung in lateraler Ausdehnung quer zur Förderrichtung aufweist.

An einem in Förderrichtung gesehen vorderen Plattenende 54 der Transportplatte 50 ist die Transportplatte 50 über eine Stufe abgesenkt ausgebildet. Dadurch wird an dem vorderen Plattenende 54 eine untere Stufe als Senkfläche 56 bereitgestellt (die näher in der in Fig. 5E gezeigten Seitenansicht gezeigt ist). Die Senkfläche 56 ist gegenüber einem hinteren Plattenende 55 abgesenkt ausgebildet und kann unter eine baugleiche Transportplatte 50 eines in Förderrichtung vorangehenden Transportaufsatzes 1 eingreifen. Dadurch wird eine Überlappung aufeinanderfolgender Transportplatten 50 ermöglicht, wodurch wiederum eine im Wesentlichen spaltfreie Förderoberfläche 140 ermöglicht wird.

An dem in Förderrichtung gesehen hinteren Plattenende 55 ist eine obere Stufe als Erhebung 57 ausgebildet (vgl. Fig. 5E), unter welcher in Betriebsposition die Senkfläche 56 der Transportplatte 50 eines nachfolgenden Transportaufsatzes 1 angeordnet sein kann. Die Erhebung 57 bildet dabei ein Bestandteil der Förderfläche des Plattenförderers 100, 200 aus.

Die Transportplatte 50 ist zumindest in Ansicht von oben und unten asymmetrisch ausgebildet. Zwar kann die obere Stufe der Transportplatte 50, welche die Transportoberfläche 10 ausbildet (also die Erhebung 57), im Wesentlichen symmetrisch z.B. in Form einer Pfeilspitze ausgebildet sein (wie in Fig. 5A gezeigt). Jedoch kann zumindest die Senkfläche 56 asymmetrisch ausgebildet sein.

Die Transportplatte 50 weist an ihrem lateral innenseitigen Plattenende 52 eine geringere Breite in Förderrichtung auf als an einem lateral außenseitigen Plattenende 53. Dadurch entsteht eine asymmetrische Ausbildung der Transportplatte 50. Das innenseitige Plattenende 52 ist lateral von einem Mittelbereich der Transportplatte 50 beabstandet und in Kurvenführung des Plattenförderers 100 bzw. 200 dem Kurvenmittelpunkt bzw. der Wendelachse W zugewandt. Das außenseitige Plattenende 53 ist ebenfalls lateral von dem Mittelbereich der Transportplatte 50 beabstandet und ist in Kurvenführung vom Kurvenmittelpunkt bzw. der Wendelachse W abgewandt.

Durch die reduzierte Breite der Transportplatte 50 am kurveninnenseitigen Plattenende 52 können aufeinanderfolgende Transportplatten 50 einfacher dicht übereinander verschachtelt werden, wie dies zum Beispiel an der Kurveninnenseite in Figuren 3, 2A und 2E gezeigt ist. An dem äußeren Plattenende 53 weist die Transportplatte 50 eine größere Breite auf, welche die Bildung von Spalten selbst an der Kurvenaußenseite verhindert, vgl. dazu auch Figuren 3 und 2A.

Im gezeigten Ausführungsbeispiel weist der gesamte kurvenaußenseitige Flügel der Transportplatte 50 eine im Wesentlichen konstante Breite auf, und zwar von einem Mittelbereich der Transportplatte 50 bis hin zum äußeren Plattenende 53. Am kurveninnenseitigen Flügel der Transportplatte 50 nimmt die Breite in Förderrichtung vom innenseitigen Plattenende 52 bis hin zum Mittelbereich der Transportplatte 50 im Wesentlichen stetig zu. Diese asymmetrische Ausbildung insbesondere der Senkfläche 56 ermöglicht eine besonders effiziente und spaltfreie Kurvenführung.

In der in Figur 5A gezeigten Ansicht von oben vertikal nach unten auf die Transportoberfläche 10 der Transportplatte 50 ist das Eingriffelement 60 vollständig von der Transportplatte 50 überdeckt und somit nicht in Figur 5A gezeigt. Mit anderen Worten ist das Eingriffelement 60 in Förderrichtung F maximal so groß wie das innenseitige Plattenende 52 dimensioniert.

**Figur 5B** zeigt in einer Seitenansicht in Förderrichtung F den Transportaufsatz 1 mit seiner Transportplatte 50. Insgesamt ist die Transportplatte 50 im Wesentlichen als flächige Platte ausgebildet, deren Dicke deutlich geringer, z.B. zumindest um 80%, bevorzugt um zumindest 90% geringer, als ihre laterale Breite und/oder ihre Breite in Förderrichtung F ausgebildet ist.

An der Unterseite 20 stützen die Tragrollen 30 den Transportaufsatz 1 ab. In einem Mittelbereich ist die Verbindungseinrichtung 40 ausgebildet, welche an ihrem innenseitigen Ende die laterale Abstützfläche 41 aufweist, welche in Kurvenführung dem Kurvenmittelpunkt zugewandt ist (und somit den Abstützrollen 130, vgl. Fig. 2C). Die Verbindungseinrichtung 40 bildet eine Zugmittelaufnahme 48 für die Förderkette 150 aus.

Unter dem innenseitigen Plattenende 52 ist das flächige Eingriffselement 60 ausgebildet, welches in vertikaler Richtung (senkrecht zur Transportoberfläche 10) dünner ausgebildet ist als die Transportplatte 50.

Wie am innenseitigen Plattenende 52 gezeigt, ist zwischen der Unterseite 20 der Transportplatte 50 und dem Eingriffelement 60 (genauer dem Eingrifffinger 62 des Eingriffelements 60) eine Aussparung ausgebildet. Diese Aussparung bildet eine Plattenaufnahme 61 für die benachbarte, im Ausführungsbeispiel nachfolgende, Transportplatte 50. Genauer ist die Plattenaufnahme 61 zur Aufnahme eines Bereichs der Vorderkante, also des vorderen Plattenendes 54, der nachfolgenden Transportplatte 50 ausgebildet.

**Figur 5C** zeigt den Transportaufsatz 1 in einer Ansicht von unten. Gezeigt ist insbesondere die Unterseite 20 der Transportplatte 50 mit den Tragrollen 30. Sowohl am innenseitigen Flügel als auch am außenseitigen Flügel der Transportplatte 50 sind z.B. jeweils zwei Tragrollen 30 angeordnet. In der Mitte der Unterseite 20 der Transportplatte 50 ist die Verbindungseinrichtung 40 befestigt. Die Verbindungseinrichtung 40 unterteilt die Transportplatte 50 in lateraler Richtung im Wesentlichen mittig in zwei Flügel. Der innenseitige Flügel kann sich von der Verbindungseinrichtung 40 bis hin zum innenseitigen Plattenende 52 erstrecken, der außenseitige Plattenflügel von der Verbindungseinrichtung 40 bis hin zum außenseitigen Plattenende 53.

Fig. 5C zeigt weiterhin eine Mehrzahl von Dämpfungsbereichen 520, im gezeigten Ausführungsbeispiel z.B. drei Dämpfungsbereiche 520 pro Flügel der Transportplatte 50, also z.B. insgesamt sechs Dämpfungsbereiche 520. Jeder der Dämpfungsbereiche 520 ragt an der Unterseite 20 aus der Transportplatte 50 heraus. Dabei ist jeder der Dämpfungsbereiche 520 in der in Fig. 5C gezeigten Ansicht von unten als ein etwa kreisförmiger Bereich ausgebildet. Jeder Dämpfungsbereich 520 bildet dabei eine Art "Dämpfungspilz" aus, von dem ein Teil des "Pilzhuts" nach unten aus der Transportplatte 50 herausragt. Alle Dämpfungsbereiche 520 sind an der Erhebung 57 der stufenförmigen Transportplatte 50 ausgebildet (vgl. Fig. 5E), stehen also von der erhöhten Stufe aus nach unten aus der Transportplatte 50 heraus.

Wie in Fig. 5C gezeigt ist das Eingriffelement 60 genau an der vertikalen Stufe der Transportplatte 50 ausgebildet. Genauer ist die Fingeraufnahme 63 des Eingriffelements 60 an der unteren Stufe der Unterseite 20 der Transportplatte 50 ausgebildet, während der Eingrifffinger 62 vertikal versetzt zu der Erhebung 57 ausgebildet ist. Deswegen steht der Eingrifffinger 62 von der Unterseite 20 ab, während der Rest des Eingriffelements 60, insbesondere die Fingeraufnahme 63, an der Unterseite der Transportplatte 50 anliegt. So wird im etwa vertikalen Zwischenraum zwischen dem beabstandet ausgebildeten Eingrifffinger 62 und der Unterseite 20 der Transportplatte 50 (genauer der Erhebung 57) die Plattenaufnahme 61 ausgebildet.

**Figur 5D** zeigt in einer perspektivischen Ansicht den Transportaufsatz 1 eines Plattenförderers von schräg unten. Hierbei ist gezeigt, wie am innenseitigen Plattenende 52 der Eingrifffinger 62 von der Unterseite 20 der Transportplatte 50 (genauer der Erhebung 57) etwa vertikal absteht und die Plattenaufnahme 61 ausbildet.

Die Plattenaufnahme 61 erstreckt sich in vertikaler Richtung von der Transportplatte 50 zum Eingrifffinger 62. In lateraler (etwa horizontaler) Richtung ist die Plattenaufnahme 61 zu beiden Seiten hin offen und unbegrenzt. Gegen die Förderrichtung F (ebenfalls in etwa horizontal) ist die Plattenaufnahme 61 ebenfalls offen und dem nachfolgenden Transportaufsatz 1 zugewandt. In Förderrichtung F (ebenfalls in etwa horizontal) ist die Plattenaufnahme 61 von der Stufe an der Unterseite 20 der Transportplatte 50 begrenzt. Die nachfolgende, benachbarte Transportplatte 50 des nachfolgenden, benachbarten Transportaufsatzes 1 kann somit nur bis zu der Stufe in die Plattenaufnahme 61 eindringen, und zwar bis sie an dieser Stufe anschlägt. Die Plattenaufnahme 61 weist somit einen Anschlag in Förderrichtung F auf, welcher die Tiefe der Plattenaufnahme 61 begrenzt.

**Figur 5E** zeigt in einer Seitenansicht die in dieser Ansicht nahezu Z-förmige Transportplatte 50 des Transportaufsatzes 1. Dabei ist am vorderen Plattenende 54 die Senkfläche 56 als untere Stufe gezeigt, welche unter die Erhebung 57 als obere Stufe am hinteren Plattenende 55 eines vorangehend an der Förderkette 150 angeordneten baugleichen Transportaufsatzes 1 eingebracht werden kann. Dadurch kann eine (vertikale) Überlappung der Transportplatten 50 ermöglicht werden. Die stufenförmige Ausbildung der Transportplatte 50 in der Seitenansicht ist in Figur 5E gezeigt. Lediglich an der Verbindungseinrichtung 40 kann die stufenförmige Ausbildung entweder ganz weggelassen oder verkürzt ausgebildet sein. Diese dient zum Befestigen an der nicht gezeigten Förderkette 150, so dass hier ein nahezu unveränderlicher Abstand zwischen aufeinanderfolgenden Transportplatten 50 festgelegt sein kann.

Am hinteren Plattenende 55 ist die Erhebung 57 so angeschrägt ausgebildet, dass die (vertikale) Dicke der Transportplatte 50 nach hinten hin abnimmt. Genauso kann das vordere Plattenende 54 an der Senkfläche 56 in Förderrichtung F abgeflacht ausgebildet sein. Dies ermöglicht ein vereinfachtes Untergreifen der Erhebung 57 der vorangehenden Transportplatte 50 und/oder ein vereinfachtes Einfädeln in die Plattenaufnahme 61.

Die (etwa horizontal angeordnete) Fläche der Erhebung 57 ist hierbei vertikal leicht oberhalb der (etwa horizontal angeordneten) Fläche der Senkfläche 56 angeordnet. Da die vertikal obere Fläche des Eingriffelements 60 auf der Unterseite 20 der Senkfläche 56 befestigt ist, liegen diese beiden Flächen etwa aufeinander. Somit ist die vertikale Höhe der Plattenaufnahme 61 zumindest so groß wie die vertikale Stärke der Senkfläche 56 der nachfolgenden, benachbarten Transportplatte 50 und somit groß genug zur deren Aufnahme.

Die vertikale Höhe der Plattenaufnahme 61 kann so dimensioniert sein, dass die nachfolgende, benachbarte Transportplatte 50 nur mit einem relativ kleinen vertikalen Bewegungsspiel darin aufgenommen wird, um ein Klappern der benachbarten Transportplatte 50 zu reduzieren. So kann die vertikale Höhe der Plattenaufnahme 61 z.B. maximal 20% größer, bevorzugt maximal 10% größer, besonders bevorzugt maximal 5% größer, ausgebildet sein als die vertikale Stärke des Bereichs der benachbarten Transportplatte 50, der in der Plattenaufnahme 61 aufgenommen werden kann.

An seiner Fingerspitze weist der Eingrifffinger 62 zudem eine (etwa vertikal ausgerichtete) Abflachung auf. Dies bedeutet, das in der gezeigten lateralen Seitenansicht der Eingrifffinger 62 zu seiner Fingerspitze hin dünner wird, wobei sich die vertikale Höhe der Plattenaufnahme 61 in Richtung von der Transportplatte weg (also hier gegen die Förderrichtung F) vergrößert. Dadurch vereinfacht sich das Einfädeln der benachbarten Transportplatte 50 in Kurvenführung. So kann die Vorderkante, also das vordere Plattenende 54, der nachfolgenden Transportplatte 50 beim Einfädeln zunächst auf diese Abflachung des Eingrifffingers 62 treffen, entlang der sie weiter in Förderrichtung F in die Plattenaufnahme 61 hineingeführt wird.

### Bezugszeichenliste

- 1: Transportaufsatz
- 10: Transportoberfläche
- 20: Unterseite
- 30: Tragrolle
- 31: Abstützplatz
- 40: Verbindungseinrichtung
- 41: laterale Abstützfläche
- 42: Befestigungsmittel
- 48: Zugmittelaufnahme
- 50: Transportplatte
- 51: Gummierung
- 52: innenseitiges Plattenende
- 53: außenseitiges Plattenende
- 54: vorderes Plattenende
- 55: hinteres Plattenende
- 56: Senkfläche
- 57: Erhebung

- 60: Eingriffelement
- 61: Plattenaufnahme
- 62: Eingrifffinger
- 63: Fingeraufnahme

- 100: Plattenförderer
- 101: Wendelsäule
- 103: Wendelkurvenbahn
- 105: unteres Bahnende
- 107: oberes Bahnende
- 110: Standfuß
- 112: Rückführfläche
- 120: Seitenführung
- 121: außenseitige Kettenführung
- 122: innenseitige Kettenführung
- 125: Bahnfläche
- 130: laterale Abstützrolle
- 140: Förderoberfläche
- 150: Förderkette
- 160: Umlenkrolle
- 200: Plattenförderer

- 500: Dämpfungsmittel
- 510: Haftbereich
- 520: Dämpfungsbereich

- B: Bahnbreite
- W: Wendelachse
- F: Förderrichtung

## Patentansprüche

1. Transportaufsatz (1) für einen Plattenförderer (100; 200) zum Fördern von Fördergut mit
- einer Transportplatte (50) zum Fördern des Förderguts auf einer Transportoberfläche (10) der Transportplatte (50); und
- einer Verbindungseinrichtung (40) mit einem Befestigungsmittel (42) zum Befestigen des Transportaufsatzes (1) an einem entlang einer Förderrichtung angetriebenen Zugmittel (150) des Plattenförderers (100; 200); und
- einer Plattenaufnahme (61) zur Aufnahme einer in Förderrichtung benachbarten Transportplatte (50);
**dadurch gekennzeichnet, dass**
die Plattenaufnahme (61) in vertikaler Richtung zwischen einer Unterseite (20) der Transportplatte (50) und einem an der Unterseite (20) der Transportplatte (50) ausgebildeten Eingriffinger (62) eines Eingriffelements (60) ausgebildet ist.

2. Transportaufsatz nach Anspruch 1, wobei die Plattenaufnahme (61) zur Aufnahme einer im Wesentlichen baugleichen Transportplatte (50) ausgebildet ist, die benachbart zum Transportaufsatz (1) an dem Zugmittel (150) befestigt ist.

3. Transportaufsatz nach Anspruch 1 oder 2, wobei die Plattenaufnahme (61) dazu ausgebildet ist, die Bewegungsfreiheit der benachbarten Transportplatte (50) zumindest in einer etwa vertikalen Richtung einzuschränken.

4. Transportaufsatz nach einem der vorangegangenen Ansprüche, wobei das Eingriffelement (60) an einem lateralen Plattenende (52; 53) der Transportplatte (50) ausgebildet ist.

5. Transportaufsatz nach Anspruch 1 oder 4 wobei das Eingriffelement (60) den in oder gegen die Förderrichtung weisenden Eingrifffinger (62) aufweist und eine gegengesetzt gerichtete Fingeraufnahme (63) zur Aufnahme eines Eingrifffingers (62) eines baugleichen Eingriffselements (60) der benachbarten Transportplatte (50).

6. Transportaufsatz nach Anspruch 5, wobei der Eingrifffinger (62) und die Fingeraufnahme (63) so dimensioniert sind, dass der in der Fingeraufnahme (63) der benachbarten Transportplatte (50) angeordnete Eingrifffinger (62) ein horizontales Bewegungsspiel aufweist.

7. Transportaufsatz nach einem der Ansprüche 5 oder 6, wobei der Eingrifffinger (62) oder die Fingeraufnahme (63) zumindest teilweise vertikal beabstandet von einer Erhebung (57) an der Unterseite (20) der Transportplatte (50) ausgebildet ist, welche in vertikale Überlappung mit einer Senkfläche (56) der benachbarten Transportplatte (50) eines in Förderrichtung nachfolgenden oder vorangehenden, baugleichen Transportaufsatzes (1) des Plattenförderers (100; 200) bringbar ist.

8. Transportaufsatz nach einem der vorangegangenen Ansprüche, wobei das Eingriffelement (60) an einer vertikalen Stufe ausgebildet ist, die in der Unterseite (20) der Transportplatte (50) ausgebildet ist.

9. Transportaufsatz nach einem der vorangegangenen Ansprüche, wobei das Eingriffelement (60) an die Unterseite (20) der Transportplatte (50) mittels Ultraschall angeschweißt ist.
und/oder
wobei das Eingriffelement (60) eine mittlere vertikale Stärke von etwa 1 mm bis etwa 5 mm aufweist.

10. Transportaufsatz nach einem der vorangehenden Ansprüche, wobei die Transportplatte (50) so asymmetrisch ausgebildet ist, dass die Breite der Transportplatte (50) in Förderrichtung des Plattenförderers (100; 200) an einem lateral innenseitigen Plattenende (52) kleiner ist als die Breite der Transportplatte (50) in Förderrichtung des Plattenförderers (100; 200) an einem lateral außenseitigen Plattenende (53).
und/oder
wobei die Plattenaufnahme (61) an einem lateral innenseitigen Plattenende (52) der Transportplatte (50) ausgebildet ist.

11. Transportaufsatz nach einem der vorangehenden Ansprüche, wobei die Plattenaufnahme (61) so ausgebildet, dass die benachbarte Transportplatte (50)
- bei Förderung entlang einer Kurve in der Plattenaufnahme (61) angeordnet ist und
- bei geradliniger Förderung außerhalb der Plattenaufnahme (61).

12. Zugmittel (150) für einen Plattenförderer (100; 200) mit einer Mehrzahl an dem Zugmittel (150) befestigten Transportaufsätze (1) nach einem der vorangehenden Ansprüche.

13. Zugmittel nach Anspruch 12, wobei die Transportaufsätze (1) so dicht in Förderrichtung des Plattenförderers (100; 200) hintereinander an dem Zugmittel (150) befestigt sind, dass die Transportplatten (50) aufeinanderfolgender Transportaufsätze (1) einander in Kurvenführung entlang einer vorbestimmten Kurvenform spaltfrei überlappen.

14. Plattenförderer (100; 200) mit einem Zugmittel (150) nach Anspruch 12 oder 13.

15. Verfahren zum Herstellen eines Transportaufsatzes (1) für einen Plattenförderer (100; 200) zum Fördern von Fördergut, mit den Schritten:
- Bereitstellen einer Transportplatte (50) zum Fördern des Förderguts auf einer Transportoberfläche (10) der Transportplatte (50);
- Bereitstellen einer Verbindungseinrichtung (40) mit einem Befestigungsmittel (42) zum Befestigen des Transportaufsatzes (1) an einem angetriebenen Zugmittel (150) des Plattenförderers (100; 200);
**gekennzeichnet durch** den Schritt:
- Bereitstellen einer Plattenaufnahme (61) an der Transportplatte (50) zum Aufnehmen einer in Förderrichtung benachbarten Transportplatte (50) derart, dass die Plattenaufnahme (61) in vertikaler Richtung zwischen einer Unterseite (20) der Transportplatte (50) und einem an der Unterseite (20) der Transportplatte (50) ausgebildeten Eingriffinger (62) eines Eingriffelements (60) ausgebildet ist.

## Claims

1. Transport attachment (1) for a plate conveyor (100; 200) for conveying conveyed goods with
- a transport plate (50) for conveying the conveyed material on a transport surface (10) of the transport plate (50); and
- a connecting device (40) comprising a fastening means (42) for fastening the transport attachment (1) to a traction means (150) of the plate conveyor (100; 200) driven along a conveying direction; and
- a plate receptacle (61) for receiving a transport plate (50) adjacent in the conveying direction;
**characterised in that**
the plate receptacle (61) is formed in the vertical direction between a lower surface (20) of the transport plate (50) and an engagement finger (62) of an engagement member (60) formed on the lower surface (20) of the transport plate (50).

2. Transport attachment according to claim 1, wherein the plate receptacle (61) is designed to receive a substantially identical transport plate (50) which is attached to the traction means (150) adjacent to the transport attachment (1).

3. Transport attachment according to claim 1 or 2, wherein the plate receptacle (61) is designed to restrict the freedom of movement of the adjacent transport plate (50) at least in an approximately vertical direction.

4. Transport attachment according to any one of the preceding claims, wherein the engagement member (60) is formed at a lateral plate end (52; 53) of the transport plate (50).

5. Transport attachment according to claim 1 or 4, wherein the engagement member (60) has the engagement finger (62) pointing in or against the conveying direction and an oppositely directed finger receptacle (63) for receiving an engagement finger (62) of an engagement member (60) of identical construction of the adjacent transport plate (50).

6. The transport attachment according to claim 5, wherein the engagement finger (62) and the finger receptacle (63) are dimensioned such that the engagement finger (62) arranged in the finger receptacle (63) of the adjacent transport plate (50) has a horizontal movement play.

7. Transport attachment according to one of the claims 5 or 6, wherein the engagement finger (62) or the finger receptacle (63) is formed at least partially vertically spaced from an elevation (57) on the underside (20) of the transport plate (50), which elevation (57) can be brought into vertical overlap with a countersunk surface (56) of the adjacent transport plate (50) of a transport attachment (1) of the plate conveyor (100; 200) which follows or precedes in the conveying direction and is of identical construction.

8. A transport attachment according to any one of the preceding claims, wherein the engagement member (60) is formed on a vertical step formed in the underside (20) of the transport plate (50).

9. Transport attachment according to any one of the preceding claims, wherein the engagement member (60) is ultrasonically welded to the underside (20) of the transport plate (50),
and/or
wherein the engagement member (60) has an average vertical thickness of about 1 mm to about 5 mm.

10. Transport attachment according to one of the preceding claims, wherein the transport plate (50) is formed asymmetrically such that the width of the transport plate (50) in the conveying direction of the plate conveyor (100; 200) at a laterally inner-side plate end (52) is smaller than the width of the transport plate (50) in the conveying direction of the plate conveyor (100; 200) at a laterally outer-side plate end (53),
and/or
wherein the plate receptacle (61) is formed at a laterally inner-side plate end (52) of the transport plate (50).

11. A transport attachment according to any one of the preceding claims, wherein the plate receptacle (61) is configured such that the adjacent transport plate (50) is
- arranged in the plate holder (61) when conveying along a curve, and
- when conveying in a straight line outside the plate receptacle (61).

12. Traction means (150) for a plate conveyor (100; 200) with a plurality of transport attachments (1) attached to the traction means (150) according to one of the preceding claims.

13. Traction means according to claim 12, wherein the transport attachments (1) are fastened to the traction means (150) one behind the other so closely in the conveying direction of the plate conveyor (100; 200) that the transport plates (50) of successive transport attachments (1) overlap one another without a gap in curve guidance along a predetermined curve shape.

14. A plate conveyor (100; 200) with a traction means (150) according to claim 12 or 13.

15. Method for producing a transport attachment (1) for a plate conveyor (100; 200) for conveying material to be conveyed, having the steps:
- providing a transport plate (50) for conveying the conveyed material on a transport surface (10) of the transport plate (50);
- providing a connecting device (40) with a fastening means (42) for fastening the transport attachment (1) to a driven traction means (150) of the plate conveyor (100; 200);
**characterized by** the step:
- providing a plate receptacle (61) on the transport plate (50) for receiving a transport plate (50) adjacent in the conveying direction in such a way that the plate receptacle (61) is formed in the vertical direction between an underside (20) of the transport plate (50) and an engagement finger (62) of an engagement member (60) formed on the underside (20) of the transport plate (50).

## Revendications

1. Module de transport (1) pour un convoyeur à plaque (100 ; 200) pour le convoyage d'un produit à convoyer, avec
- une plaque de transport (50) pour le convoyage du produit à convoyer sur une surface de transport (10) de la plaque de transport (50); et
- un dispositif de liaison (40) avec un moyen de fixation (42) pour fixer le module de transport (1) à un moyen de traction (150) du convoyeur à plaque (100 ; 200) entraîné le long d'une direction de convoyage; et
- un logement de plaque (61) pour recevoir une plaque de transport (50) voisine dans la direction de convoyage ;
**caractérisé en ce que**
le logement de plaque (61) est réalisé dans la direction verticale entre un côté inférieur (20) de la plaque de transport (50) et un doigt d'engagement (62) d'un élément d'engagement (60) réalisé sur le côté inférieur (20) de la plaque de transport (50).

2. Module de transport selon la revendication 1, dans lequel le logement de plaque (61) est réalisé pour recevoir une plaque de transport (50) de construction essentiellement identique, qui est fixée au moyen de traction (150) au voisinage du module de transport (1).

3. Module de transport selon la revendication 1 ou 2, dans lequel le logement de plaque (61) est réalisé pour limiter la liberté de mouvement de la plaque de transport voisine (50) au moins dans une direction approximativement verticale.

4. Module de transport selon l'une quelconque des revendications précédentes, dans lequel l'élément d'engagement (60) est réalisé à une extrémité de plaque latérale (52; 53) de la plaque de transport (50).

5. Module de transport selon la revendication 1 ou 4, dans lequel l'élément d'engagement (60) présente le doigt d'engagement (62) orienté dans ou contre la direction de convoyage et un logement de doigt (63) dirigé en sens inverse pour recevoir un doigt d'engagement (62) d'un élément d'engagement (60) de construction identique de la plaque de transport voisine (50).

6. Module de transport selon la revendication 5, dans lequel le doigt d'engagement (62) et le logement de doigt (63) sont dimensionnés de telle sorte que le doigt d'engagement (62) agencé dans le logement de doigt (63) de la plaque de transport voisine (50) présente un jeu de mouvement horizontal.

7. Module de transport selon l'une quelconque des revendications 5 ou 6, dans lequel le doigt d'engagement (62) ou le logement de doigt (63) est réalisé au moins en partie à distance verticale d'une élévation (57) sur le côté inférieur (20) de la plaque de transport (50), qui peut être amenée en chevauchement vertical avec une surface d'abaissement (56) de la plaque de transport voisine (50) d'un module de transport (1) de construction identique du convoyeur à plaque (100; 200) qui suit ou qui précède dans la direction de convoyage.

8. Module de transport selon l'une quelconque des revendications précédentes, dans lequel l'élément d'engagement (60) est réalisé sur un gradin vertical réalisé dans le côté inférieur (20) de la plaque de transport (50).

9. Module de transport selon l'une quelconque des revendications précédentes, dans lequel l'élément d'engagement (60) est soudé par ultrasons au côté inférieur (20) de la plaque de transport (50), et/ou
dans lequel l'élément d'engagement (60) présente une épaisseur verticale moyenne d'environ 1 mm à environ 5 mm.

10. Module de transport selon l'une quelconque des revendications précédentes, dans lequel la plaque de transport (50) est réalisée de manière asymétrique de telle sorte que la largeur de la plaque de transport (50) dans la direction de convoyage du convoyeur à plaque (100 ; 200) à une extrémité de plaque (52) située latéralement à l'intérieur est inférieure à la largeur de la plaque de transport (50) dans la direction de convoyage du convoyeur à plaque (100; 200) à une extrémité de plaque située latéralement à l'extérieur (53),
et/ou
dans lequel le logement de plaque (61) est réalisé à une extrémité de plaque située latéralement à l'intérieur (52) de la plaque de transport (50).

11. Module de transport selon l'une quelconque des revendications précédentes, dans lequel le logement de plaque (61) est réalisé de telle sorte que la plaque de transport voisine (50)
- est agencée dans le logement de plaque (61) lors d'un convoyage le long d'une courbe, et
- à l'extérieur du logement de plaque (61) lors d'un convoyage en ligne droite.

12. Moyen de traction (150) pour un convoyeur à plaque (100; 200) avec une pluralité de modules de transport (1) selon l'une quelconque des revendications précédentes fixés au moyen de traction (150).

13. Moyen de traction selon la revendication 12, dans lequel les modules de transport (1) sont fixés au moyen de traction (150) les uns derrière les autres dans la direction de convoyage du convoyeur à plaque (100 ; 200) de manière si dense que les plaques de transport (50) de modules de transport (1) successifs se chevauchent sans fente dans le guidage courbe le long d'une forme de courbe prédéterminée.

14. Convoyeur à plaque (100; 200) avec un moyen de traction (150) selon la revendication 12 ou 13.

15. Procédé de fabrication d'un module de transport (1) pour un convoyeur à plaque (100; 200) pour le convoyage d'un produit à convoyer, comprenant les étapes suivantes:
- la fourniture d'une plaque de transport (50) pour le convoyage du produit à convoyer sur une surface de transport (10) de la plaque de transport (50);
- la fourniture d'un dispositif de liaison (40) avec un moyen de fixation (42) pour fixer le module de transport (1) à un moyen de traction entraîné (150) du convoyeur à plaque (100 ; 200);
**caractérisé par** l'étape suivante :
- la fourniture d'un logement de plaque (61) sur la plaque de transport (50) pour recevoir une plaque de transport (50) voisine dans la direction de convoyage, de telle sorte que le logement de plaque (61) est réalisé dans la direction verticale entre un côté inférieur (20) de la plaque de transport (50) et un doigt d'engagement (62) d'un élément d'engagement (60) réalisé sur le côté inférieur (20) de la plaque de transport (50).
